(19) **Europäisches Patentamt / European Patent Office / Office européen des brevets**

(11) **EP 4 779 584 A1**

(12) **EUROPEAN PATENT APPLICATION**
published in accordance with Art. 153(4) EPC

(43) Date of publication:
**22.07.2026 Bulletin 2026/30**

(21) Application number: **24867037.4**

(22) Date of filing: **11.07.2024**

(51) International Patent Classification (IPC):
**G06V 10/774** (2022.01)    **G06V 10/776** (2022.01)
**G06N 3/084** (2023.01)    **G06N 3/092** (2023.01)
**G06N 3/0499** (2023.01)    **G06N 3/0464** (2023.01)
**G06N 3/045** (2023.01)

(52) Cooperative Patent Classification (CPC):
**G06N 3/045; G06N 3/0464; G06N 3/0499;
G06N 3/084; G06N 3/092; G06V 10/774;
G06V 10/776**

(86) International application number:
**PCT/CN2024/104953**

(87) International publication number:
**WO 2025/060619 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:    22.09.2023    CN 202311234964
27.11.2023    CN 202311607988

(71) Applicant: **Huawei Cloud Computing
Technologies Co., Ltd.
Gui'an New District, Guizhou 550025 (CN)**

(72) Inventors:
• **PENG, Zhuwei**
 **Guiyang, Guizhou 550025 (CN)**
• **GU, Yingjie**
 **Guiyang, Guizhou 550025 (CN)**
• **WANG, Zhefeng**
 **Guiyang, Guizhou 550025 (CN)**
• **ZHENG, Yi**
 **Guiyang, Guizhou 550025 (CN)**
• **HUAI, Baoxing**
 **Guiyang, Guizhou 550025 (CN)**

(74) Representative: **Goddar, Heinz J.
Boehmert & Boehmert
Anwaltspartnerschaft mbB
Pettenkoferstrasse 22
80336 München (DE)**

(54) **MODEL TRAINING METHOD AND APPARATUS, AND COMPUTING DEVICE**

(57)    This application provides a model training method and apparatus, and a compute device. The method includes: receiving a plurality of values of a configuration parameter of a first model that are input by a user, where the configuration parameter of the first model includes a training parameter and/or a model parameter of the first model; performing prediction based on a second model, to obtain a plurality of pieces of training indicator data of the first model that respectively correspond to the plurality of values of the configuration parameter, where the training indicator data of the first model includes training process data of the first model and/or hardware indicator data consumed by a server for training the first model; determining target training indicator data from the plurality of pieces of training indicator data of the first model, and sending, to the user, a target value that is in the plurality of values of the configuration parameter and that corresponds to the target training indicator data; and receiving the target value determined by the user, and training the first model based on the target value. This method can improve a training speed and training efficiency of a model.

Receive a plurality of values of a configuration parameter of a first model that are input by a user — 510

Perform prediction based on a second model, to obtain a plurality of pieces of training indicator data of the first model that respectively correspond to the plurality of values of the configuration parameter — 520

Determine target training indicator data from the plurality of pieces of training indicator data of the first model, and send, to the user, a target value that is in the plurality of values of the configuration parameter and that corresponds to the target training indicator data — 530

Receive the target value determined by the user, and train the first model based on the target value — 540

FIG. 5

## Description

This application claims priorities to Chinese Patent Application No. 202311234964.8, filed with the China National Intellectual Property Administration on September 22, 2023 and entitled "INTELLIGENT QUANTITATIVE ANALYSIS MODELING METHOD FOR NETWORK MODEL TRAINING, AND COMPUTE DEVICE", and to Chinese Patent Application No. 202311607988.3, filed with the China National Intellectual Property Administration on November 27, 2023 and entitled "MODEL TRAINING METHOD AND APPARATUS, AND COMPUTE DEVICE", both of which are incorporated herein by reference in their entireties.

## TECHNICAL FIELD

This application relates to the AI field, and more specifically, to a model training method and apparatus, and a compute device.

## BACKGROUND

With continuous progress and improvement of artificial intelligence technologies, deep neural network models have been widely used in fields such as natural language processing, computer vision, and speech recognition. Recent application research shows that increasing a model scale can further improve a capability of a model to solve complex tasks. However, as the model scale increases, a computation amount needed for model training increases exponentially, and time for completing model training also increases exponentially. When facing enormous time and high computing costs needed for large-scale deep learning models, how to improve a model training speed and resource utilization efficiency, and reduce trial-and-error costs has become a key issue in the artificial intelligence field.

In current related technical solutions, functions of model training platforms are usually monotonous, and only simple model training functions are provided, including invoking model code, files, and data, and scheduling computational power resources. As training costs of current models (especially large models) increase, trial-and-error costs of a single training also increase exponentially. An existing model training platform finally obtains optimal indicator data of a model in a training process based on experience by continuously performing trial-and-error on the model a plurality of times, leading to a waste of training resources.

Therefore, how to reduce trial-and-error costs in a model training process and improve a training speed and training efficiency of a model becomes a technical problem that needs to be urgently resolved.

## SUMMARY

This application provides a model training method. The method can help users predict and find optimal indicator data of a model in a training process, thereby reducing trial-and-error costs of model training, and improving a training speed and training efficiency of the model.

According to a first aspect, a model training method is provided. The method includes: receiving a plurality of values of a configuration parameter of a first model that are input by a user, where the configuration parameter of the first model includes a training parameter and/or a model parameter of the first model; performing prediction based on a second model, to obtain a plurality of pieces of training indicator data of the first model that respectively correspond to the plurality of values of the configuration parameter, where the training indicator data of the first model includes training process data of the first model and/or hardware indicator data consumed by a server for training the first model, input information of the second model includes a first value of the configuration parameter, output information of the second model includes first training indicator data of the first model, the plurality of values of the configuration parameter include the first value, and the training indicator data of the first model includes the first training indicator data; determining target training indicator data from the plurality of pieces of training indicator data of the first model, and sending, to the user, a target value that is in the plurality of values of the configuration parameter and that corresponds to the target training indicator data; and receiving the target value determined by the user, and training the first model based on the target value.

In the foregoing technical solution, a training process or training performance of the first model may be predicted by using the second model, to help users predict and find optimal indicator data of the first model in the training process, instead of finally obtaining the optimal indicator data based on experience by continuously performing trial-and-error on the first model a plurality of times. In this way, a resource waste of the model in the training process can be avoided, training resources of the first model can be saved, trial-and-error costs for training the first model can be further reduced, and a training speed and training efficiency of the first model can be improved.

With reference to the first aspect, in some implementations of the first aspect, the method further includes: obtaining a configuration parameter of each of at least one third model and training indicator data of each third model; and performing training based on the configuration parameter of each third model and the training indicator data of each third model, to obtain the second model.

With reference to the first aspect, in some implementations of the first aspect, in a training process of the at least one third model, the configuration parameter of each of the at least one third model and the training indicator data of each third model are automatically collected.

With reference to the first aspect, in some implementations of the first aspect, the method further includes: generating a recommendation report of the first model based on the target value of the configuration parameter of the first model, where the recommendation report of the first model includes the target value, a recommendation reason of the target value, and/or a benefit obtainable by training the first model by using the target value; and displaying the recommendation report of the first model to the user.

With reference to the first aspect, in some implementations of the first aspect, the method further includes: in the training process of the first model, automatically collecting a value of a configuration parameter used for the first model in an actual training process and actual corresponding training indicator data.

With reference to the first aspect, in some implementations of the first aspect, the method further includes: updating the second model based on the value of the configuration parameter used for the first model in the actual training process and the actual corresponding training indicator data.

In the foregoing technical solution, the value of the configuration parameter of the first model in the actual training process and the corresponding training indicator data are obtained, so that the second model can be further updated based on the value of the configuration parameter of the first model in the actual training process and the corresponding training indicator data, thereby continuously improving prediction accuracy of the second model.

With reference to the first aspect, in some implementations of the first aspect, the method is applied to a cloud management platform, the cloud management platform is configured to manage an infrastructure that provides a cloud service, the infrastructure includes at least one cloud data center, at least one server is disposed in each cloud data center, and the at least one server is configured to train the first model, the second model, and the third model.

According to a second aspect, a model training apparatus is provided. The apparatus includes a receiving module, a prediction module, a determining module, and a training module. The receiving module is configured to receive a plurality of values of a configuration parameter of a first model that are input by a user, where the configuration parameter of the first model includes a training parameter and/or a model parameter of the first model. The prediction module is configured to perform prediction based on a second model, to obtain a plurality of pieces of training indicator data of the first model that respectively correspond to the plurality of values of the configuration parameter, where the training indicator data of the first model includes training process data of the first model and/or hardware indicator data consumed by a server for training the first model, input information of the second model includes a first value of the configuration parameter, output information of the second model includes first training indicator data of the first model, the plurality of values of the configuration parameter include the first value, and the training indicator data of the first model includes the first training indicator data. The determining module is configured to: determine target training indicator data from the plurality of pieces of training indicator data of the first model, and send, to the user, a target value that is in the plurality of values of the configuration parameter and that corresponds to the target training indicator data. The training module is configured to: receive the target value determined by the user, and train the first model based on the target value.

With reference to the second aspect, in some implementations of the second aspect, the receiving module is further configured to obtain a configuration parameter of each of at least one third model and training indicator data of each third model. The training module is further configured to perform training based on the configuration parameter of each third model and the training indicator data of each third model, to obtain the second model.

With reference to the second aspect, in some implementations of the second aspect, the receiving module is specifically configured to: in a training process of the at least one third model, automatically collect the configuration parameter of each of the at least one third model and the training indicator data of each third model.

With reference to the second aspect, in some implementations of the second aspect, the apparatus further includes: a generation module, configured to generate a recommendation report of the first model based on the target value of the configuration parameter of the first model, where the recommendation report of the first model includes the target value, a recommendation reason of the target value, and/or a benefit obtainable by training the first model by using the target value; and a display module, configured to display the recommendation report of the first model to the user.

With reference to the second aspect, in some implementations of the second aspect, the training module is further configured to: in a training process of the first model, automatically collect a value of a configuration parameter used for the first model in an actual training process and actual corresponding training indicator data.

With reference to the second aspect, in some implementations of the second aspect, the training module is further configured to update the second model based on the value of the configuration parameter used for the first model in the actual training process and the actual corresponding training indicator data.

With reference to the second aspect, in some implementations of the second aspect, the apparatus is used in a cloud management platform, the cloud management platform is configured to manage an infrastructure that provides a cloud service, the infrastructure includes at least one cloud data center, at least one server is disposed in each cloud data center, and the at least one server is configured to train the first model, the second model, and the third model.

According to a third aspect, a compute device cluster is provided, and includes at least one compute device. Each compute device includes a processor and a storage. The processor of the at least one compute device is configured to execute instructions stored in the storage of the at least one compute device, to enable the compute device cluster to perform the method according to any one of the first aspect or the possible implementations of the first aspect.

According to a fourth aspect, a chip is provided. The chip obtains instructions and executes the instructions to implement the method according to any one of the first aspect and the implementations of the first aspect.

Optionally, in an implementation, the chip includes a processor and a data interface. The processor reads, through the data interface, instructions stored in a storage, to perform the method according to any one of the first aspect and the implementations of the first aspect.

Optionally, in an implementation, the chip may further include the storage. The storage stores the instructions. The processor is configured to execute the instructions stored in the storage. When the instructions are executed, the processor is configured to perform the method according to any one of the first aspect and the implementations of the first aspect.

According to a fifth aspect, a computer program product including instructions is provided. When the instructions are run by a compute device cluster, the compute device cluster is enabled to perform the method according to any one of the first aspect and the implementations of the first aspect.

According to a sixth aspect, a computer-readable storage medium is provided, and includes computer program instructions. When the computer program instructions are executed by a compute device cluster, the compute device cluster performs the method according to any one of the first aspect and the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a non-volatile storage medium.

**BRIEF DESCRIPTION OF DRAWINGS**

FIG. 1 is a diagram of a training phase and an inference phase of a model;
FIG. 2 is a block diagram of a deep learning model 100;
FIG. 3 is a block diagram of a cloud scenario applicable to an embodiment of this application;
FIG. 4 is a diagram of interaction between a tenant and an AI basic development platform applicable to an embodiment of this application;
FIG. 5 is a schematic flowchart of a model training method according to an embodiment of this application;
FIG. 6 is a block diagram of a model training system according to an embodiment of this application;
FIG. 7 is a diagram of a list interface that is of a training job and that is provided by a job management submodule according to an embodiment of this application;
FIG. 8 is a diagram of a list interface that is of a modeling job and that is provided by a job management submodule according to an embodiment of this application;
FIG. 9 is a diagram of an interface of a user-defined data processing manner according to an embodiment of this application;
FIG. 10 is a diagram of an interface of an analysis report of training quantitative analysis data according to an embodiment of this application;
FIG. 11 is a diagram of a training job configuration interface according to an embodiment of this application;
FIG. 12 is a diagram of a training modeling configuration interface according to an embodiment of this application;
FIG. 13 is a diagram of an interface of a value range of a training job configuration according to an embodiment of this application;
FIG. 14 is a diagram of an interface of an intelligent configuration suggestion for a training job according to an embodiment of this application;
FIG. 15 is a diagram of an interface of modeling analysis and suggestion according to an embodiment of this application;
FIG. 16 is a schematic flowchart of another model training method according to an embodiment of this application;
FIG. 17 is a block diagram of a model training apparatus 1700 according to an embodiment of this application;
FIG. 18 is a diagram of an architecture of a compute device 1800 according to an embodiment of this application;
FIG. 19 is a diagram of an architecture of a compute device cluster according to an embodiment of this application; and
FIG. 20 is a diagram of a connection between a compute device 1800A and a compute device 1800B over a network according to an embodiment of this application.

## DESCRIPTION OF EMBODIMENTS

The following describes technical solutions of this application with reference to accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "relevant (corresponding, relevant)" and "corresponding (corresponding)" may be sometimes used interchangeably. It should be noted that meanings expressed by the terms are consistent when a difference between the terms is not emphasized.

A service scenario described in embodiments of this application is intended to describe the technical solutions in embodiments of this application more clearly, and does not constitute a limitation on the technical solutions provided in embodiments of this application. A person of ordinary skill in the art can learn that the technical solutions provided in embodiments of this application are also applicable to a similar technical problem with evolution of a network architecture and emergence of a new service scenario.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "comprise", "have", and their variants all mean "include but are not limited to", unless otherwise specifically emphasized in another manner.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

Artificial intelligence (artificial intelligence, AI) is a theory, a method, a technology, and an application system that simulates, extends, and expands human intelligence by using a digital computer or a machine controlled by a digital computer, to perceive an environment, obtain knowledge, and obtain an optimal result by using the knowledge. In other words, artificial intelligence is a branch of computer science and is intended to understand essence of intelligence and produce a new intelligent machine that can react in a manner similar to human intelligence. Artificial intelligence is to research design principles and implementation methods of various intelligent machines, so that the machines have perception, inference, and decision-making functions. Research in the field of artificial intelligence includes robotics, natural language processing, computer vision, decision-making and inference, human-machine interaction, recommendation and search, AI basic theories, and the like.

A basic principle of AI is to combine massive data with powerful computing and processing capabilities and intelligent algorithms to build an AI model that resolves specific problems. In this way, the AI model can automatically summarize and learn potential patterns or features from data, achieving a way of thinking close to humans.

An AI model, also referred to as an AI algorithm (or an AI operator), is a collective term of mathematical algorithms constructed according to artificial intelligence principles and is also a basis for using AI to resolve a specific problem. Based on different specific methods and/or technologies for implementing artificial intelligence, the AI model may also be specifically referred to as a machine learning model, a deep learning model, or a reinforcement learning model. The following specifically describes machine learning, a machine learning model, deep learning, a deep learning model, a neural network, reinforcement learning, and a reinforcement learning model.

Machine learning is a method for implementing artificial intelligence. A target of the method is to design and analyze some algorithms (that is, models) that enable a computer to automatically "learn". The designed algorithms are referred to as machine learning models. The machine learning model is a type of algorithm that obtains a rule by automatically analyzing data and predicts unknown data according to the rule. There are various types of machine learning models. The machine learning models may be classified into the following types depending on whether a label corresponding to training data needs to be depended on during model training: 1. supervised learning model; and 2. unsupervised learning model.

1. The supervised learning model is a model obtained after a parameter of an initial AI model is determined based on data in a given training dataset and a label corresponding to each piece of data in the training dataset. A process of determining the parameter of the initial AI model based on the data in the training dataset and the label corresponding to the data is also referred to as supervised learning (or supervised training). The label of the data in the training dataset is usually manually annotated to identify a correct answer to the data in a specific task. Typical supervised learning models include: a support vector machine, a neural network model, a logistic regression model, a decision tree, a Naive Bayesian model, a Gaussian discriminative model, and the like. The supervised learning model is usually used for classification or regression.

2. The unsupervised learning model is a model obtained after a parameter of an initial AI model is determined based on unlabeled data in a given training dataset. A process of determining the parameter of the initial AI model based on the unlabeled training data is also referred to as unsupervised learning (or unsupervised training). Through unsupervised learning, a model may discover meaningful information and association in the data, to perform data result prediction. There are various types of unsupervised learning models, where common unsupervised learning models include a clustering (clustering) model, principal component analysis (PCA), an anomaly detection model, an autoencoder, a generative adversarial network (GAN), and the like.

Deep learning is a new technical field generated in a machine learning research process. Specifically, deep learning is a method for performing deep representation learning on data in machine learning. Deep learning is for interpreting the data by establishing a neural network that simulates a human brain for analysis and learning.

In the AI field, deep learning is a learning technology based on a deep neural network algorithm. The deep learning model includes an input layer, a hidden layer, and an output layer. The deep learning model processes data by using a plurality of nonlinear transformations.

In a machine learning method, almost all features need to be determined by industry experts, and then the features are encoded. However, a deep learning algorithm attempts to learn a feature from data. An algorithm designed based on a deep learning idea is referred to as the deep learning model.

Currently, a typical structure of the deep learning model is a deep neural network. The neural network is a mathematical model or a computational model that simulates a structure and a function of a biological neural network (a central nervous system of an animal, especially a brain). The neural network is formed by a large quantity of connected neurons for computation. A neural network may include a plurality of neural network layers with different functions, and each layer includes parameters and computation rules. Different layers in the neural network have different names based on different computation formulas or different functions. For example, a layer for convolution computation is referred to as a convolutional layer. The convolutional layer is commonly used to perform feature extraction on an input signal (for example, an image). A neural network may alternatively include a combination of a plurality of neural subnetworks. Neural networks of different structures are applicable to different scenarios (for example, classification and recognition), or provide different effects when applicable to a same scenario. That the structures of the neural networks are different specifically includes one or more of the following: quantities of network layers in the neural networks are different, sequences of the network layers are different, or weights, parameters, or computation formulas at the network layers are different. A plurality of different types of neural networks that have high accuracy and that are used in application scenarios such as recognition or classification already exist in the industry. Some of the neural networks, after being trained by using a specific dataset, may be separately used to complete a task, or complete a task in combination with another neural network (or another functional module).

In other words, the deep learning model is actually a machine learning model with a complex structure of the neural network. Depending on whether a label corresponding to training data needs to be depended on during training of the deep learning model, the deep learning model may also be classified into a supervised learning model and an unsupervised learning model. Details are not described herein again. Classic deep learning models include a convolutional neural network (convolutional neural network, CNN), a recurrent neural network (recurrent neural network, RNN), a recursive neural network (recursive neural network, RNN), and the like.

Reinforcement learning is a special field in machine learning, and is a process of continuously learning an optimal policy, making a sequence decision, and obtaining a maximum return through interaction between an agent (Agent) and an environment (Environment).

In general, reinforcement learning is learning "what to do (in other words, how to map a current situation to an action) to maximize a digitalized benefit signal". The agent is not informed of what action to take, but tries to find out which action will produce the most benefit.

Reinforcement learning is different from supervised learning and unsupervised learning in the machine learning field. Supervised learning is a process of learning from externally provided training data with a label (task-driven), and unsupervised learning is a process of searching for an implicit structure in unlabeled data (data-driven). Reinforcement learning is a process of searching for a better solution through "exploration". The agent needs to develop existing experience to gain a benefit, and explore, so that better action selection space can be obtained in the future (that is, learning from a mistake).

Any AI model needs to be trained before being used to resolve a specific technical problem. AI model training is a process of performing computation on training data by using a specified initial model, and adjusting a parameter of the initial model by using a specific method based on a computing result, so that the model gradually learns a rule and has a specific function. After training, an AI model with a stable function can be used for inference. AI model inference is a process of computing input data by using a trained AI model, to obtain a predicted inference result.

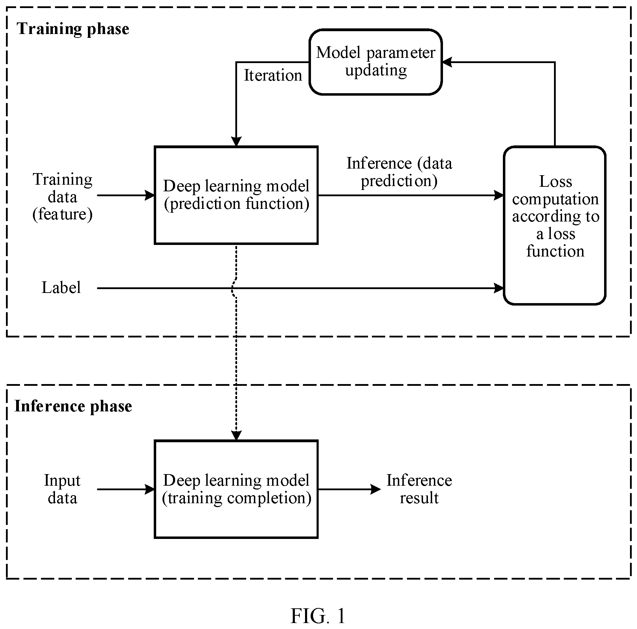

Supervised training is the most common way to train an AI model. For example, most deep learning models are trained in a supervised training manner. The following describes, with reference to FIG. 1, the most widely used supervised training manner for a deep learning model.

As shown in FIG. 1, in a training phase, a training set for the deep learning model first needs to be constructed based on a target. The training set includes a plurality of pieces of training data, and a label is set for each piece of training data. The label of the training data is a correct answer of the training data to a specific question, and the label may represent a target of training the deep learning model by using the training data. For example, when a deep learning model that can be used to identify different animals is to be trained, the training set may include images (that is, training data) of a plurality of different animals, and each image may have a label to identify a type of an animal included in the image, for example, a cat or a dog. In this example, the type of the animal corresponding to each image is the label of the training data.

When the deep learning model is trained, the training data may be input in batches into a deep learning model obtained through parameter initialization. In the deep learning model, computation (that is, inference) is performed on the training data, to obtain a prediction result for the training data. The prediction result obtained through inference and the label corresponding to the training data are used as data for computing a loss according to a loss function. The loss function is a function used to calculate, in the model training phase, a difference (that is, a loss value loss) between a prediction result of the model for training data and a label of the training data. The loss function may be implemented by using different mathematical functions. Common expressions of the loss function include a mean square error loss function, a logarithmic loss function, a least square method, and the like.

The loss value computed according to the loss function (loss function) may be used to update a parameter of the deep learning model. A specific parameter updating manner is usually a gradient descent method. Model training is a process of repeated iterations. In each iteration, different training data is inferred and a loss value is computed. A target of a plurality of iterations is to continuously update the parameter of the deep learning model and find a parameter configuration that minimizes or gradually stabilizes the loss value of the loss function.

It should be understood that the loss function is a function that maps a value of a random event or a value of a related random variable of the random event to a nonnegative real number, to represent a "risk" or a "loss" of the random event. In application, the loss function is usually associated with an optimization problem as a learning criterion, in other words, the model is solved and evaluated by minimizing the loss function. For example, in machine learning, a loss function is used for parametric estimation (parametric estimation) of a model, and a loss value obtained according to the loss function may be used to describe a degree of difference between a prediction value and an actual value of the model. Common loss functions include a mean square error loss function, a support vector machine (support vector machine, SVM) hinge loss function, a cross entropy loss function, and the like.

In the training phase, to make training efficiency of the model and performance of a trained model better, some proper hyperparameters need to be set for training. The hyperparameters of the deep learning model are a type of parameters that cannot be obtained by learning training data in a training process or that cannot change due to driving of training data, and are a concept relative to parameters in the model. The hyperparameters of the deep learning model are usually manually set based on experience or an experiment. The hyperparameters include a learning rate (learning rate), a batch sample size (batch size), a network structure hyperparameter (for example, a quantity of network layers (also referred to as a depth), an interaction manner between network layers, a quantity of convolution kernels, a size of a convolution kernel, and an activation function), and the like. The learning rate is used as a hyperparameter to control an update amplitude of a parameter weight in a model in a training process, and greatly affects a training speed and precision.

As shown in FIG. 1, the trained deep learning model can be used to perform inference on input data. In an inference phase, data in an actual application scenario is usually used as the input data, and an inference result may be obtained through inference of the trained deep learning model. The inference phase is actual application of the trained deep learning model, and an AI capability can be quickly used to resolve a specific technical problem. Currently, there are many AI application scenarios. Inference of the deep learning model may also be used in various application scenarios, for example, scenarios of personnel identification for an access control system, violence detection for a video, and express tracking number detection and identification.

The foregoing uses training of a most typical deep learning model as an example for description. Training of another type of model is slightly different, but a principle is similar. In most cases, inference is performed on training data, and a parameter in a model is adjusted based on an inference result, to obtain a parameter combination that ensures stable model performance.

Generally, an AI model in machine learning usually needs to be trained in a supervised learning manner. The AI model trained in the supervised learning manner can learn of, in a more targeted manner in a training set with labels, an association between training data in the training set and a corresponding label, so that a trained AI model has higher accuracy when being used to predict other input data.

An AI development framework is a tool library for an AI developer to quickly develop an AI model. The AI development framework encapsulates a plurality of operators that can be invoked and includes a tool needed for AI model development, training, and deployment.

In processes such as building, training, and inference of the AI model, the encapsulated operators in the AI framework can be invoked in an API invoking mode, and then a corresponding operation can be completed with some pieces of simple driver code.

The AI development framework in the industry is usually open-source. A typical AI development framework for developing a deep learning model is also referred to as a deep learning framework, and includes PaddlePaddle, Tensorflow, Caffe, Theano, MXNet, Torch, mindspore, PyTorch, and the like. The developer may install the AI development framework locally and then develop an AI model locally. Alternatively, the developer can use the AI development framework to develop an AI model on an online platform (for example, an online open-source framework platform and a public cloud AI basic development platform).

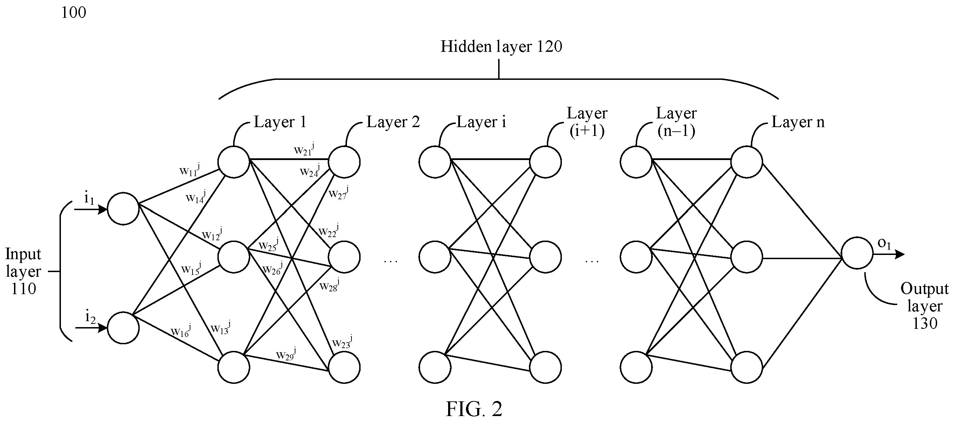

With reference to FIG. 2, the following describes in detail a possible deep learning model training process applied to an embodiment of this application.

FIG. 2 is a block diagram of a deep learning model 100. The deep learning model 100 may include an input layer 110, a hidden layer 120, and an output layer 130.

It should be understood that in this embodiment of this application, an example in which the hidden layer 120 includes n (n is greater than 1) layers of neurons is used for description.

It should be further understood that each layer of the input layer 110, the output layer 130, and the hidden layer 120 includes one or more neurons. In FIG. 2, an example in which the input layer 110 includes two neurons, each of the n layers of the hidden layer 120 includes three neurons, and the output layer 130 includes one neuron is used for description.

The deep learning model 100 shown in FIG. 2 may be a fully connected neural network or a convolutional neural network (convolutional neural network, CNN). When all neurons at each layer are connected to all neurons at a next layer (none of weights $w$ of all the neurons at each layer is 0), the deep learning model 100 is the fully connected neural network model. When not all neurons at each layer are connected to all neurons at a next layer (some weights $w$ of the neurons at each layer are 0), the deep learning model 100 is the CNN model.

Refer to FIG. 2. The deep learning model 100 may include forward propagation (forward propagation, FP) computation and back propagation (back propagation, BP) computation.

The following describes in detail a process of performing FP computation in a compute node.

In the FP computational process, training data, for example, pixel information of an input image, is obtained, and the training data is used as an input $i_1, i_2$) of the input layer 110 of the deep learning model 100. A prediction result may be output from the output layer 130 after the input of the input layer 110 passes through a plurality of neurons at the hidden layer 120. Specifically, neurons at each layer of the hidden layer 120 correspond to one parameter matrix. A product of the input of the input layer 110 and a parameter matrix of neurons at a first layer is used as an input of the neurons at the first layer of the hidden layer 120. After the input of the neurons at the first layer of the hidden layer 120 is processed by using an activation function (for example, a sigmoid function) in the neurons at the first layer, an output value of the neurons at the first layer is output. A product of the output value of the neurons at the first layer of the hidden layer 120 and a parameter matrix of neurons at a second layer is used as an input of the neurons at the second layer of the hidden layer 120. Similarly, by analogy, the prediction result is finally output from the output layer 130.

Weights in these parameter matrices need to be corrected in a large quantity of trainings in actual application. Each parameter matrix including weights obtained through training may be used to extract pixel information from a to-be-inferred image input by a user, to help the deep learning model 100 perform correct inference on the to-be-inferred image.

In a $j^{th}$ iteration process of FP computation, an input of a 1st neuron at the first layer is $A_{11}^{j} = w_{11}^{j} \times i_1 + w_{14}^{j} \times i_2$, and an output of the 1st neuron at the first layer is $f(A_{11}^{j})$; an input of a 2nd neuron at the first layer is $A_{12}^{j} = w_{12}^{j} \times i_1 + w_{15}^{j} \times i_2$, and an output of the 2nd neuron at the first layer is $f(A_{12}^{j})$; and an input of a 3rd neuron at the first layer is

$A_{13}^j = w_{13}^j \times i_1 + w_{16}^j \times i_2$ , and an output of the 3rd neuron at the first layer is $\mathbf{f}(A_{13}^j)$. $\mathbf{f}(A_{11}^j)$ is an activation function whose input is $A_{11}^j$.

In the j$^{th}$ iteration process, the input of the neurons at the first layer is:

$$\begin{pmatrix} w_{11}^j \times i_1 + w_{14}^j \times i_2 \\ w_{12}^j \times i_1 + w_{15}^j \times i_2 \\ w_{13}^j \times i_1 + w_{16}^j \times i_2 \end{pmatrix} = \begin{pmatrix} w_{11}^j & w_{14}^j \\ w_{12}^j & w_{15}^j \\ w_{13}^j & w_{16}^j \end{pmatrix} \times \begin{pmatrix} i_1 \\ i_2 \end{pmatrix}$$

Therefore, the input of the neurons at the first layer may be represented as $A_1^j = w_1^j \times B_0^j$ , and the output may be represented as $B_1^j = \mathbf{f}(A_1^j)$.

$$A_1^j = \begin{pmatrix} A_{11} \\ A_{12} \\ A_{13} \end{pmatrix}, w_1^j = \begin{pmatrix} w_{11}^j & w_{14}^j \\ w_{12}^j & w_{15}^j \\ w_{13}^j & w_{16}^j \end{pmatrix}, \text{and } B_0^j = \begin{pmatrix} i_1 \\ i_2 \end{pmatrix}.$$

j represents a quantity of iterations, and is generally equal to a quantity of times that the input layer 110 obtains the input ($i_1$, $i_2$). $w_1^j$ represents the parameter matrix of the neurons at the first layer in the j$^{th}$ iteration process.

The product of the output $B_1$ of the neurons at the first layer and the parameter matrix of the neurons at the second layer may be used as the input of the neurons at the second layer. Therefore, in the j$^{th}$ iteration process of FP, the input of the neurons at the second layer may be represented as $A_2^j = w_2^j \times B_1^j$ , and an output of the neurons at the second layer may be represented as $B_2^j = \mathbf{f}(A_2^j)$.

Similarly, in the j$^{th}$ iteration process of FP, an input of neurons at an i$^{th}$ layer may be represented as $A_i^j = w_i^j \times B_{i-1}^j$ , and an output of neurons at the i$^{th}$ layer may be represented as $B_i^j = \mathbf{f}(A_i^j)$ , where 1≤i≤n.

The following describes in detail a process of performing BP computation in a compute node.

In a training process of the deep learning model 100, it is expected that a prediction value $o_1$ output from the output layer 130 of the deep learning model 100 is as close as possible to prior knowledge (prior knowledge) of the training data. The prior knowledge is also referred to as a ground truth (ground truth), and generally includes a prediction result corresponding to training data provided by a person. Therefore, a current prediction value can be compared with the prior knowledge. Then, a parameter matrix at each layer of the deep learning model 100 is updated based on a difference between the current prediction value and the prior knowledge (certainly, there is usually an initialization process before a first update, to be specific, the parameter matrix corresponding to the neurons at each layer of the hidden layer 120 of the deep learning model 100 is initialized). In addition, an error BP algorithm is used to correct a weight in the parameter matrix in the deep learning model 100 in the training process of the deep learning model 100, to minimize an error loss of the deep learning model 100.

Specifically, there may be an error between a prediction value generated in the FP computational process and the prior knowledge. If the output prediction value is greater than the prior knowledge, the weight in the parameter matrix may be adjusted to make the output prediction value smaller. If the output prediction value is smaller than the prior knowledge, the weight in the parameter matrix may be adjusted to make the output prediction value greater. BP computation is an error-dominant reverse motion, and aims to obtain an optimal parameter matrix of the neurons at each layer.

It should be understood that the training data input by the user may include the training data used as the input and the prediction result corresponding to the training data provided by the person.

In an example, the deep learning model 100 is used in the image recognition field. The training data input to the deep learning model 100 is pixel information of an image, and the prior knowledge corresponding to the training data is a label "dog" of the image. The training data is input to the input layer 110, and after FP computation of the deep learning model 100 is performed on the training data, a prediction value output from the output layer 130 is compared with the prior knowledge. For example, if the prediction value output from the output layer 130 is "cat", the parameter matrix at each layer in the deep learning model 100 may be updated based on an error between the prediction value and the prior knowledge "dog".

In the j$^{th}$ iteration process, an error E between an output prediction value $o_1$ and the prior knowledge may be computed through BP computation. In addition, the weight in the parameter matrix of the neurons at each layer in the deep learning model 100 may be corrected based on the error E along a direction of the output layer 130, the hidden layer 120, and the input layer 110. Specifically, correction of the weight may be separately computing a gradient $g_i^j$ of the weight in the parameter matrix. The gradient $g_i^j$ may be obtained through derivation on the weight in the parameter matrix by using the error E, where 1≤i≤n.

Similar to the j$^{th}$ iteration process, in a (j + 1)$^{th}$ iteration of the deep learning model 100, FP computation is still performed before BP computation. For example, in an FP computational process in the (j + 1)$^{th}$ iteration, a weight in the parameter matrix is corrected based on the gradient $g_i^j$ computed through FP in the j$^{th}$ iteration, and an output prediction value is computed based on a parameter matrix after correction. In a BP computational process in the (j + 1)th iteration, a gradient $g_i^{j+1}$ of a weight in the parameter matrix is computed based on an error E between the output value computed through FP in the (j + 1)th iteration and the prior knowledge, so that the weight in the parameter matrix can be corrected again in a (j + 1)th iteration process based on $g_i^{j+1}$. The weight in the parameter matrix is continuously corrected in a plurality of iteration processes, so that an output value predicted by using the deep learning model 100 is as close as possible to the prior knowledge of the training data.

Specifically, in FP computation in the (j + 1)th iteration, when the input and the output of the neurons at the ith layer are computed, a parameter matrix of the neurons at the ith layer becomes $w_i^{j+1} = w_i^j - g_i^j$. For a process of computing an input and an output of the neurons at each layer based on $w_i^{j+1}$, refer to the foregoing descriptions of the FP computation in the **j**th iteration. Details are not described herein again.

It should be noted that the parameter matrix computation formula shown above is a possible implementation, and may be another variation of the formula, and both of which fall within the protection scope of embodiments of this application.

With continuous progress and improvement of artificial intelligence technologies, deep neural network models have been widely used in fields such as natural language processing, computer vision, and speech recognition. Recent application research shows that increasing a model scale can further improve a capability of a model to solve complex tasks. However, as the model scale increases, a computation amount needed for model training increases exponentially, and time for completing model training also increases exponentially. When facing enormous time and high computing costs needed for large-scale deep learning models, how to improve a model training speed and resource utilization efficiency, and reduce trial-and-error costs has become a key issue in the artificial intelligence field.

In current related technical solutions, functions of model training platforms are usually monotonous, and only simple model training functions are provided, including invoking model code, files, and data, and scheduling computational power resources. As training costs of current models (especially large models) increase, trial-and-error costs of a single training also increase exponentially. An existing model training platform cannot help users predict and find optimal indicator data of a model in a training process, but obtains optimal indicator data of the model in the training process based on experience by continuously performing trial-and-error on the model a plurality of times, leading to a waste of training resources.

In view of this, an embodiment of this application provides a model training method. In the method, a training process or training performance of a model may be predicted, to help users predict and find optimal indicator data of the model in the training process, instead of finally obtaining the optimal indicator data based on experience by continuously performing trial-and-error on the model a plurality of times. In this way, a resource waste of the model in the training process can be avoided, training resources of the model can be saved, trial-and-error costs for training the model can be further reduced, and a training speed and training efficiency of the model can be improved.

It should be understood that the model training method provided in this embodiment of this application may be applied to various model training platforms. This is not specifically limited in this application.

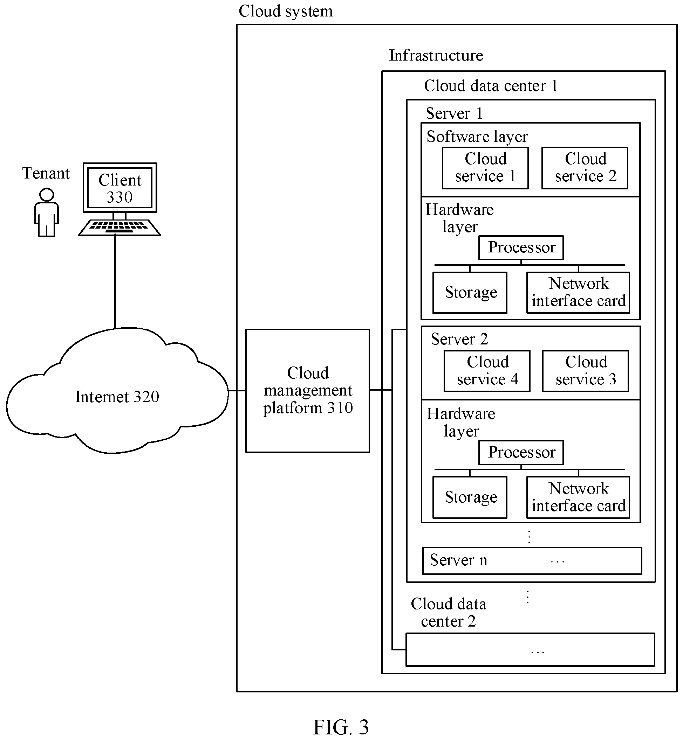

For example, in a possible implementation, the method provided in this embodiment of this application may be applied to a cloud service scenario, and a cloud management platform in the cloud service scenario performs the method. For ease of description, the cloud service scenario is first described below in detail with reference to FIG. 3.

FIG. 3 is a block diagram of a cloud scenario applicable to an embodiment of this application. As shown in FIG. 3, the cloud scenario may include a cloud management platform 310, an internet 320, and a client 330.

As shown in FIG. 3, the cloud management platform 310 is configured to manage an infrastructure that provides a plurality of cloud services. The infrastructure includes a plurality of cloud data centers. Each cloud data center includes a plurality of servers. Each server includes a cloud service resource, to provide a corresponding cloud service for a tenant.

The cloud management platform 310 may be located in a cloud data center, and may provide an access interface (for example, an interface or an application programming interface (application programming interface, API)). The tenant may operate the client 330 to remotely access the access interface, to register a cloud account and a password on the cloud management platform 310 and log in to the cloud management platform 310. After the cloud management platform 310 successfully authenticates the cloud account and the password, the tenant may further pay on the cloud management platform 310 to select and purchase a virtual machine with a specific specification (a processor, a memory, or a disk). After payment for purchase succeeds, the cloud management platform 310 provides a remote login account and password of the purchased virtual machine, and the client 330 may be used to remotely log in to the virtual machine, to install and run an application of the tenant in the virtual machine. Therefore, the tenant may create, manage, log in to, and operate the virtual machine in the cloud data center via the cloud management platform 310. The virtual machine may also be referred to as a cloud server (elastic compute service, ECS) or an elastic instance (different cloud service providers have different names).

It should be understood that the tenant of the cloud service may be an individual, an enterprise, a school, a hospital, an administrative agency, or the like.

Functions of the cloud management platform 310 include but are not limited to a user console, a computing management service, a network management service, a storage management service, an authentication service, and an image management service. The user console provides an interface or an API to interact with the tenant. The computing management service is used to manage a server on which a virtual machine and a container are run, and a bare metal server. The network management service is used to manage a network service (for example, a gateway or a firewall). The storage management service is used to manage a storage service (for example, a data bucket service). The authentication service is used to manage a tenant account and password. The image management service is used to manage a virtual machine image. The tenant may log in to the cloud management platform 310 by using the client 330 over the internet 320, to manage a leased cloud service.

For example, the cloud service may include but is not limited to an AI service. An AI service and product in the cloud domain reflect on-demand use and purchase of a cloud service, and also feature abstraction, diversity, and wide application of AI technologies. The AI service in the cloud domain includes an AI basic development platform service of a platform-as-a-service (platform-as-a-service, PaaS) type.

It should be understood that the AI basic development platform service is a PaaS cloud service in the cloud management platform 310, and is a software platform provided, based on a large quantity of basic resources and a software capability of a public cloud service provider, for a user (also referred to as a tenant, an AI developer, or the like) to assist in AI model building, training, and deployment, and AI application development and deployment. In other words, the public cloud service provider provides the tenant with an AI basic development platform based on support of sufficient underlying resources and an upper-layer AI algorithm capability. A built-in AI development framework and various built-in AI algorithms in the AI basic development platform can allow the tenant to quickly build and develop, on the AI basic development platform, an AI model or AI application that meets a personalized requirement.

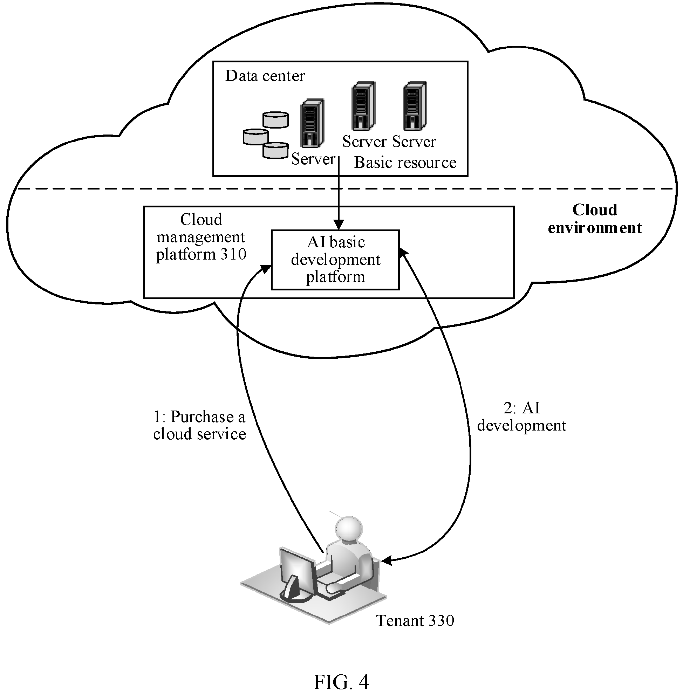

As shown in FIG. 4, a form of interaction between the tenant and the AI basic development platform mainly includes: The tenant logs in to the cloud management platform 310 on a web page of the client 330, and selects and purchases a cloud service of the AI basic development platform on the cloud management platform 310. After the purchase, the tenant can perform a full procedure of AI development based on a function provided by the AI basic development platform.

For example, the tenant develops and trains an AI model on the AI basic development platform based on basic resources (which are mainly compute resources, such as a CPU, a GPU, and an NPU) in a data center of the cloud service provider. Therefore, when purchasing and using the AI basic development platform, the tenant mainly pays for a used resource. For example, the tenant needs to perform prepayment before using the AI basic development platform. During prepayment, resources of different specifications support different functions of the AI basic development platform. The tenant mainly selects a resource name and specification based on a function the AI basic development platform that is to be used. The tenant may further select purchase duration. The cloud management platform 310 prices a package based on the resource name and specification and the purchase duration that are selected by the user. After purchasing the prepaid package, the tenant can use a capability provided by the AI basic development platform and a basic compute resource included in the prepaid package to perform AI model building, training, and deployment. When resource usage exceeds a quota of the current prepaid package, the cloud management platform 310 charges for an excess resource in a pay-per-use charging manner. Actually, basic resources used by the tenant on the AI basic development platform are mainly virtualized compute resources, such as a virtual machine and a container.

It should be understood that selling of the AI basic development platform is actually in a form in which a software capability and a hardware virtualization basic resource are integrally sold, and basic resources supporting any procedure in the AI basic development platform may be distributed on different physical devices, that is, hardware devices that actually execute one procedure are usually a server cluster in a same data center, or server clusters distributed in different data centers.

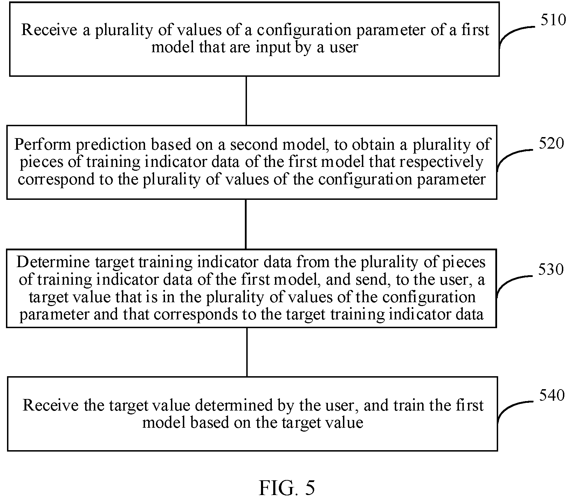

With reference to FIG. 5, the following describes in detail a model training method according to an embodiment of this application. It should be understood that the example in FIG. 5 is merely intended to help a person skilled in the art understand embodiments of this application, but are not intended to limit embodiments of this application to a specific value or specific scenario in the example in FIG. 5. It is clear that a person skilled in the art can make various equivalent modifications or changes based on the following example provided in FIG. 5, and such modifications and changes also fall within the scope of embodiments of this application.

FIG. 5 is a schematic flowchart of a model training method according to an embodiment of this application. As shown in FIG. 5, the method may include steps 510 to 540. The following separately describes steps 510 to 540 in detail.

Step 510: Receive a plurality of values of a configuration parameter of a first model that are input by a user.

In this embodiment of this application, the first model may also be referred to as a to-be-trained model of the user. The user may input the plurality of values of the configuration parameter of the first model, that is, the user inputs a value range of the configuration parameter. The value range includes the plurality of values.

For example, the configuration parameter of the first model may include but is not limited to at least one of the following: a training parameter of the first model and a model parameter of the first model. The training parameter of the first model includes but is not limited to at least one of the following: a training data sample, a quantity of iterations, a batch size, a learning rate parameter, a weight parameter, a training budget, a training target, and the like of the first model. The model parameter of the first model includes but is not limited to at least one of the following: a structure, a type, and the like of the first model.

Step 520: Perform prediction based on a second model, to obtain a plurality of pieces of training indicator data of the first model that respectively correspond to the plurality of values of the configuration parameter.

In this embodiment of this application, the plurality of values of the configuration parameter may be used as input information of the second model, and the prediction is performed based on the second model, to obtain the plurality of pieces of training indicator data of the first model that respectively correspond to the plurality of values. For example, the plurality of values of the configuration parameter of the first model include a first value, and the plurality of pieces of training indicator data of the first model include first training indicator data. The first value of the configuration parameter may be used as the input information of the second model and input to the second model. The second model obtains the first training indicator data based on the input information, and the first training indicator data may be used as output information of the second model. For another example, the plurality of values of the configuration parameter of the first model include a second value, and the plurality of pieces of training indicator data of the first model include second training indicator data. The second value of the configuration parameter may be used as input information of the second model and input to the second model. The second model obtains the second training indicator data based on the input information, and the second training indicator data may be used as output information of the second model.

For example, the training indicator data of the first model may include but is not limited to at least one of the following: a training process parameter of the first model and hardware indicator data consumed by a server for training the first model. The training process parameter of the first model includes but is not limited to at least one of the following: a prediction result, a loss value loss, training time, and the like of the first model in each iteration process. The hardware indicator data consumed for training the first model includes but is not limited to at least one of the following: a compute resource, a storage resource, a network resource, or the like consumed by the server for training the first model.

Optionally, before step 520, the second model may be further obtained through training. In a possible implementation, a value of a configuration parameter of each of at least one third model and training indicator data of each third model may be obtained, and training is performed based on the value of the configuration parameter of each third model and the training indicator data of each third model, to obtain the second model.

For example, the configuration parameter of the third model may include but is not limited to at least one of the following: a training parameter of the third model and a model parameter of the third model. The training parameter of the third model includes but is not limited to at least one of the following: a training data sample, a quantity of iterations, a batch size, a learning rate parameter, a weight parameter, a training budget, a training target, and the like of the third model. The model parameter of the third model includes but is not limited to at least one of the following: a structure, a type, and the like of the third model.

For example, the training indicator data of the third model may include but is not limited to at least one of the following: a training process parameter of the third model and hardware indicator data consumed by a server for training the third model. The training process parameter of the third model includes but is not limited to at least one of the following: a prediction result, a loss value loss, training time, and the like of the third model in each iteration process. The hardware indicator data consumed for training the third model includes but is not limited to at least one of the following: a compute resource, a storage resource, a network resource, or the like consumed by the server for training the third model.

It should be understood that the third model may also be referred to as a model for which a training process is completed. In other words, in this embodiment of this application, the value of the configuration parameter and the training indicator data that are of the trained model in the training process may be obtained, and training is performed based on the value of the configuration parameter and the training indicator data that are of the trained model in the training process, to obtain the second model. In this way, the second model can predict a training process of the to-be-trained model (the foregoing first model) of the user, and the training process of the to-be-trained model does not need to be actually performed.

An implementation of obtaining the value of the configuration parameter of the third model and the training indicator data of the third model is not specifically limited in this embodiment of this application. The value of the configuration parameter and the training indicator data that are of the third model may be obtained after training of the third model is completed, or the value of the configuration parameter and the training indicator data that are of the third model may be obtained in the training process of the third model.

An example in which the value of the configuration parameter and the training indicator data that are of the third model are obtained in the training process of the third model is used. In a possible implementation, in the training process of the third model, the value of the configuration parameter and the training indicator data that are of the third model may be automatically collected in a bypass manner.

Step 530: Determine target training indicator data from the plurality of pieces of training indicator data of the first model, and send, to the user, a target value that is in the plurality of values of the configuration parameter and that corresponds to the target training indicator data.

In this embodiment of this application, the plurality of pieces of training indicator data of the first model are obtained based on the second model, and the target training indicator data is determined from the plurality of pieces of training indicator data of the first model. Specifically, optimal training indicator data in the plurality of pieces of training indicator data of the first model may be used as the target training indicator data.

In this embodiment of this application, the target value that is in the plurality of values of the configuration parameter and that corresponds to the target training indicator data may be further sent to the user. In other words, a value that is in the plurality of values of the configuration parameter of the first model and that corresponds to the target training indicator data may be determined as the target value. The target value may also be referred to as a target value of the configuration parameter of the first model.

Step 540: Receive the target value determined by the user, and train the first model based on the target value.

In this embodiment of this application, after obtaining the target value of the configuration parameter of the first model and determining to train the first model based on the target value of the configuration parameter, the user may train the first model based on the target value of the configuration parameter.

In the foregoing technical solution, a training process or training performance of the first model may be predicted by using the second model, to help users predict and find the optimal indicator data of the first model in the training process, instead of finally obtaining the optimal indicator data based on experience by continuously performing trial-and-error on the first model a plurality of times. In this way, a resource waste of the model in the training process can be avoided, training resources of the first model can be saved, trial-and-error costs for training the first model can be further reduced, and a training speed and training efficiency of the first model can be improved.

Optionally, in some embodiments, data analysis and processing may be further performed on the plurality of values of the configuration parameter of the first model and the plurality of pieces of corresponding training indicator data, to generate a recommendation report of the configuration parameter of the first model (which may also be referred to as a recommendation report of the first model for short), and the report is displayed to the user. For example, the recommendation report may include information such as the target value of the configuration parameter of the first model, a recommendation reason of the target value, and/or a benefit obtainable by training the first model by using the target value.

It should be understood that the data analysis and processing on the plurality of values of the configuration parameter of the first model and the plurality of pieces of corresponding training indicator data may be performed in a default processing manner of a system, or may be performed in a user-defined processing manner, for example, collecting statistics on data distribution and proportion. This is not specifically limited in this embodiment of this application.

Optionally, in some embodiments, a value of a configuration parameter of the first model in an actual training process and corresponding training indicator data may also be collected. Specifically, the value of the configuration parameter and the training indicator data that are of the first model may be obtained after training of the first model is completed, or the value of the configuration parameter and the training indicator data that are of the first model may be obtained in the training process of the first model. An example in which the value of the configuration parameter and the training indicator data that are of the first model are obtained in the training process of the first model is used. In a possible implementation, in the actual training process of the first model, the value of the configuration parameter and the training indicator data that are of the first model may be automatically collected in a bypass manner.

Optionally, in some embodiments, the value of the configuration parameter of the first model in the actual training process and the corresponding training indicator data are obtained, so that the second model can be further updated based on the value of the configuration parameter of the first model in the actual training process and the corresponding training indicator data, thereby continuously improving prediction accuracy of the second model.

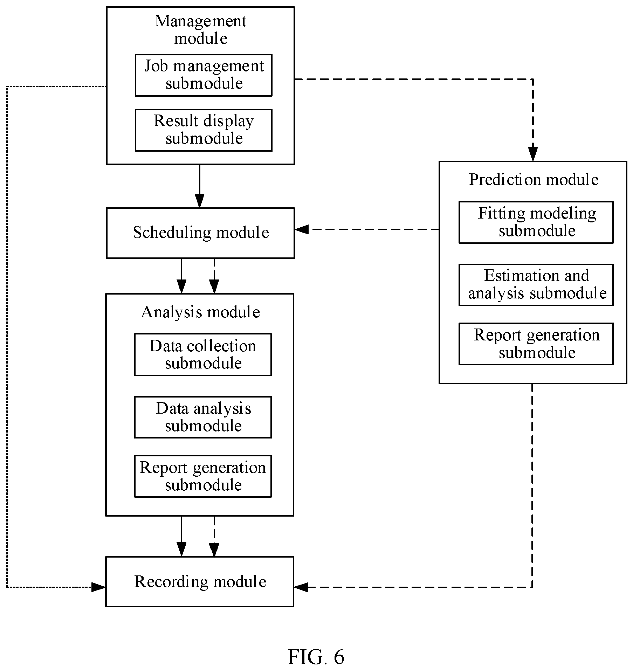

With reference to FIG. 6, the following describes in detail a block diagram of a model training system according to an embodiment of this application. It should be understood that the example in FIG. 6 is merely intended to help a person skilled in the art understand embodiments of this application, but are not intended to limit embodiments of this application to a specific value or specific scenario in the example in FIG. 6. It is clear that a person skilled in the art can make various equivalent modifications or changes based on the following example provided in FIG. 6, and such modifications and changes also fall within the scope of embodiments of this application.

Refer to FIG. 6. The block diagram of the model training system may include a management module (manager), a scheduling module (scheduler), a prediction module (predictor), an analysis module (profiler), and a recording module (recorder). The following separately describes functions of the modules in detail.

1. Management module (manager)

The management module (manager), as a job management module, is responsible for: lifecycle management of a training job and a modeling job; and providing an interactive guide interface for a user to manage a job, read quantitative analysis data and a model prediction result in a model training process, and the like.

It should be understood that the training job represents a training task of a to-be-trained model, and the to-be-trained model includes the foregoing first model, the foregoing at least one third model, and another to-be-trained model. The modeling job (which may also be referred to as a training modeling job) includes building a model used to predict a training process of a to-be-trained model. For example, the modeling job is used to build the foregoing second model.

For example, the management module (manager) may be divided into a job management submodule and a result display submodule. The job management submodule is used as a unified management entry of the training job and the modeling job, and the result display submodule is configured to: read data in the recording module (recorder), and display the data on the result display submodule.

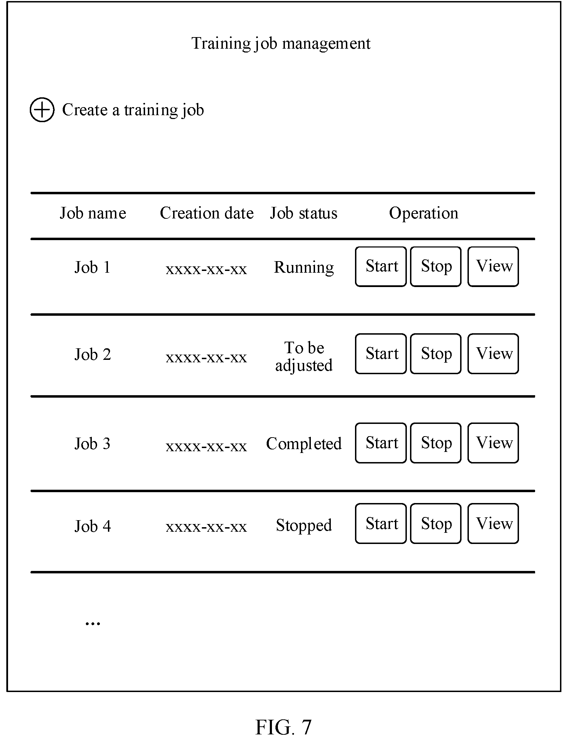

For example, FIG. 7 is a diagram of a list interface that is of a training job and that is provided by a job management submodule according to an embodiment of this application. As shown in FIG. 7, information about the training job, such as a job name, a creation date, a job status, and an operation, is recorded on the interface of the training job, to implement functions such as creating, running, stopping, and deleting the training job. If a user has a new to-be-trained model, the user may click create a training job to add a training job.

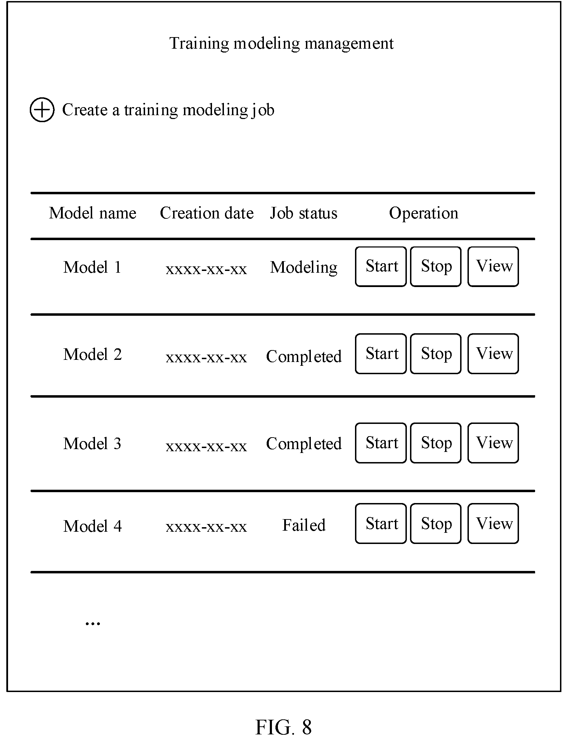

For example, FIG. 8 is a diagram of a list interface that is of a modeling job and that is provided by a job management submodule according to an embodiment of this application. As shown in FIG. 8, information about a model used to predict a training process of a to-be-trained model, such as a creation date, a job status, and an operation of the model, is recorded on the interface of the modeling job, to implement functions such as creating, running, stopping, and deleting the modeling job. If a user needs to build a new model (a model used to predict a training process of a to-be-trained model), the user may click create a training modeling job to build the new model.

2. Scheduling module (scheduler)

The scheduling module (scheduler), as a module for training resource interconnection, is responsible for shielding an implementation detail like an underlying training resource pool, scheduling a proper training resource, and actually starting and stopping the training job.

3. Analysis module (profiler)

The analysis module (profiler) is used to collect, process, and dump quantitative analysis data, intelligently generate a report, and the like in the model training process (the training job). It should be understood that the quantitative analysis data in the foregoing model training process represents a configuration parameter and training indicator data for modeling in the model training process. For example, the quantitative analysis data may include but is not limited to the foregoing value of the configuration parameter of the first model and/or the foregoing training indicator data of the first model, and the foregoing value of the configuration parameter of each third model and/or the foregoing training indicator data of each third model. For specific descriptions of the configuration parameter and the training indicator data, refer to the foregoing descriptions. Details are not described herein again.

Specifically, after starting the training job, the scheduling module (scheduler) synchronously invokes the analysis module (profiler) based on the information about training. The analysis module (profiler) is used as a bypass unit of the training job, and during execution of the training job, collects data (referred to as the quantitative analysis data) of the model in the training process in parallel with the training job, without affecting a procedure of the training job. After the quantitative analysis data is collected, the analysis module (profiler) processes and analyzes the quantitative analysis data based on logic built in the system or user-defined logic, for example, computes data distribution and identifies a bottleneck. Finally, the analysis module (profiler) generates a quantitative analysis report based on a result of analyzing and processing of the data, and assists the user in analyzing training performance of the training job and a system bottleneck, to help the user further adjust a training configuration of the training job, and improve model training performance and resource utilization.

Collected and analyzed data of all training jobs run by all users in the system and generated reports are stored in the recording module (recorder). As data collected in the recording module (recorder) accumulates, the analysis module (profiler) can optimize, by using more data, a model that has been built in the modeling job.

In an example, the analysis module (profiler) may be divided into a data collection submodule, a data analysis submodule, and a report generation submodule. The following describes functions of these submodules in detail.

The data collection submodule is configured to collect the quantitative analysis data in the training process during training job execution. The data collection submodule obtains a data collection solution, a parameter, and the like from the analysis module (profiler). After a task of the training job is started, the data collection submodule collects the quantitative analysis data in the training process at specific time. When sufficient data is collected, the data collection submodule stops collecting, stores and archives the collected data, and invokes the data analysis submodule to further process the collected data.

The data analysis submodule is configured to further analyze and process the data collected by the data collection submodule. After being invoked by the data collection submodule, the data analysis submodule reads the collected data from a data storage, and processes and analyzes the data. After archiving analyzed and processed data, the data analysis submodule invokes the report generation submodule for further processing.

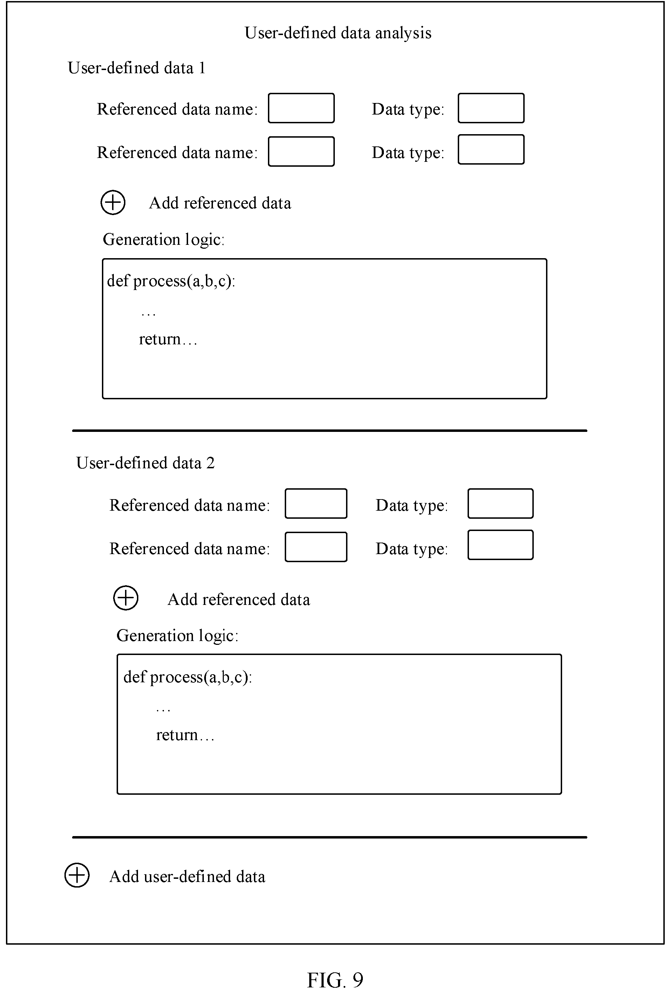

It should be understood that the data analysis submodule may analyze and process the data in a plurality of manners. This is not specifically limited in this application. In an example, processing may be performed in a default manner of the system. In another example, processing may be performed in a user-defined manner. For example, the user may add expected data processing logic or logic on a user-defined data analysis interface shown in FIG. 9.

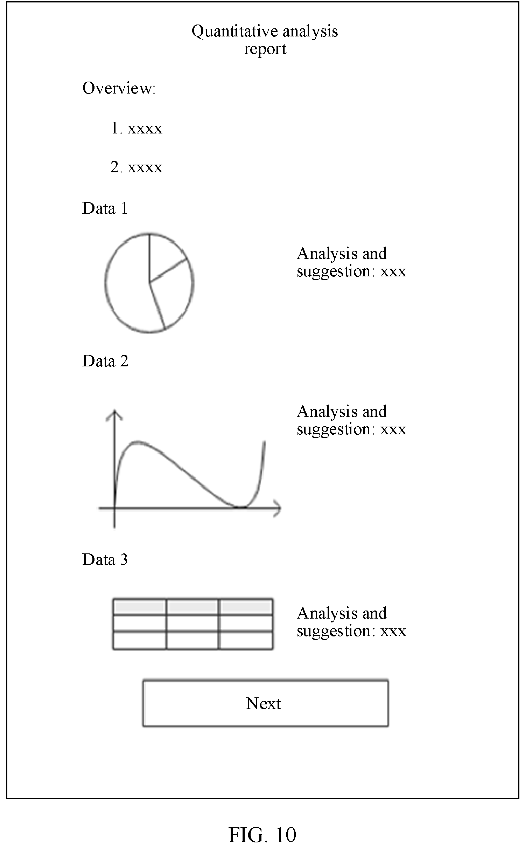

The report generation submodule is configured to: sort the data analyzed by the data analysis submodule, explore a bottleneck of the data, and display sorted data in a form of a readable report. Specifically, after being invoked by the data analysis submodule, the report generation submodule reads the analyzed data from the data storage, and generates content related to the data, such as descriptions, an icon, bottleneck analysis, and an optimization suggestion. For example, the content is organized based on a report template shown in FIG. 10 as an analysis report of training quantitative analysis data, and is stored in the data storage for a display use of the management module (manager) or for reading and analysis by the prediction module (predictor).

4. Prediction module (predictor)

The prediction module (predictor) is configured to predict an optimal selection of configuration information such as a training policy, a model parameter, training data, and hardware of a to-be-trained model under a given expected target and costs. The prediction module (predictor) may use an existing built model for prediction; or may perform new fitting modeling by using quantitative analysis data that is of another trained model and that is collected by the analysis module (profiler), and intelligently provide optimization of a training configuration, benefit comparison, and a suggestion in a current scenario based on a fitting modeling result.

In this embodiment of this application, after starting a training modeling job (task), the management module (manager) invokes the prediction module (predictor), obtains quantitative analysis data of an existing training task in the recording module (recorder) based on a range of training configuration parameters selected by the user, and collects training-related data of a low-cost training experiment task that is run a plurality of times, to perform fitting modeling. A modeling output model and a related configuration thereof are stored in the recording module (recorder).

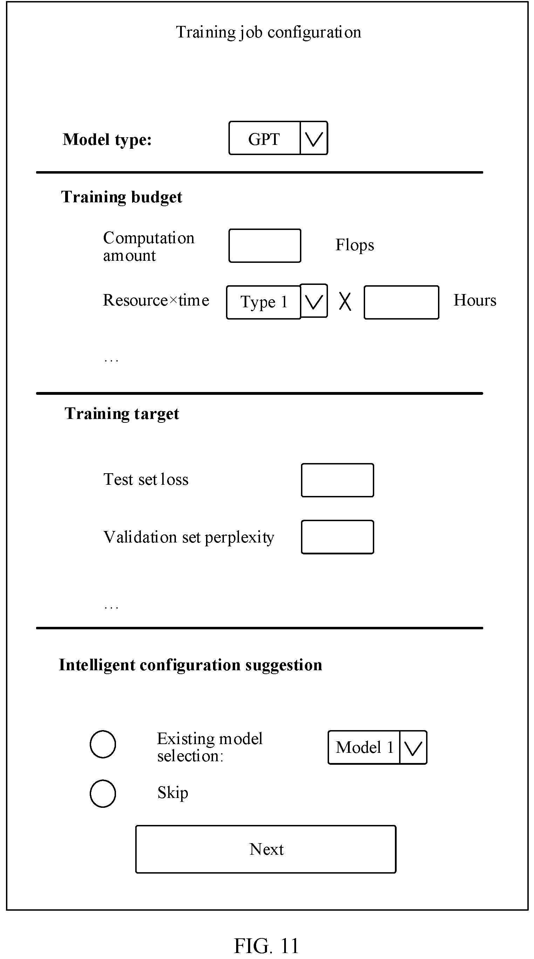

When starting a training job (task), the management module (manager) configures the training job (task). As shown in FIG. 11, if the user enables an intelligent configuration suggestion function on a configuration interface of the training job, a built model is read from the recording module (recorder). When a configuration change is estimated, a training configuration with highest end-to-end efficiency is predicted based on the model selected by the user. Finally, an evaluation report is generated, which provides a recommended configuration and subsequent adjustment result estimation, thereby reducing trial-and-error costs of the user and improving overall resource utilization efficiency.

In some embodiments, the prediction module (predictor) further periodically monitors accumulation of quantitative analysis data in the recording module (recorder). When there is sufficient proper data, the prediction module (predictor) starts a training modeling process based on the data and historical data, to optimize an existing built model (a model used to predict a training process of a to-be-trained model).

For example, the prediction module (predictor) may include a fitting modeling submodule, an estimation and analysis submodule, and a report generation submodule. The following separately describes functions of these submodules in detail.

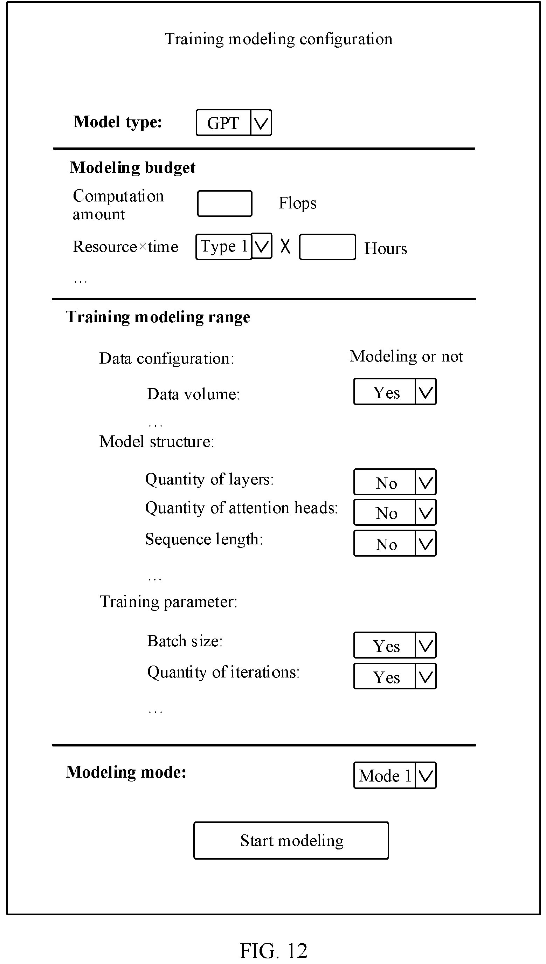

For example, the user inputs information such as a model type, a training budget, a target configuration, a training modeling range, and a modeling mode on a modeling configuration interface shown in FIG. 12. The fitting modeling submodule automatically performs fitting modeling for a training process in a current scenario based on information such as a model type, a training budget, a target configuration, a training modeling range, and a modeling mode that are currently set by the user. After receiving a fitting request, the fitting modeling submodule automatically generates a series of lower-cost training experiment configurations based on the training budget and the target configuration, invokes the scheduling module (scheduler) to start running, and invokes a training result collected by the recording module (recorder) and quantitative analysis data collected by the analysis module (profiler). After completing the foregoing series of training experiments, the fitting modeling submodule performs modeling for a training process by using a neural network or in a numerical fitting manner. Specifically, the fitting modeling submodule queries whether the recording module (recorder) includes a quantitative analysis record that can be used for modeling. If the recording module (recorder) includes the quantitative analysis record that can be used for modeling, the fitting modeling submodule directly uses related data of the corresponding record without actually running an experiment, to further reduce fitting modeling costs; and finally, stores a training modeling result in the recording module (recorder).

After completing training modeling, the fitting modeling submodule periodically monitors quantitative analysis data collected in another training task in the recording module (recorder), sifts out, from the data, data that can be used to optimize a specific training modeling model, and restarts modeling of a training process, to provide more data for current model fitting, so that the fitting modeling submodule performs more accurate modeling for the training process.

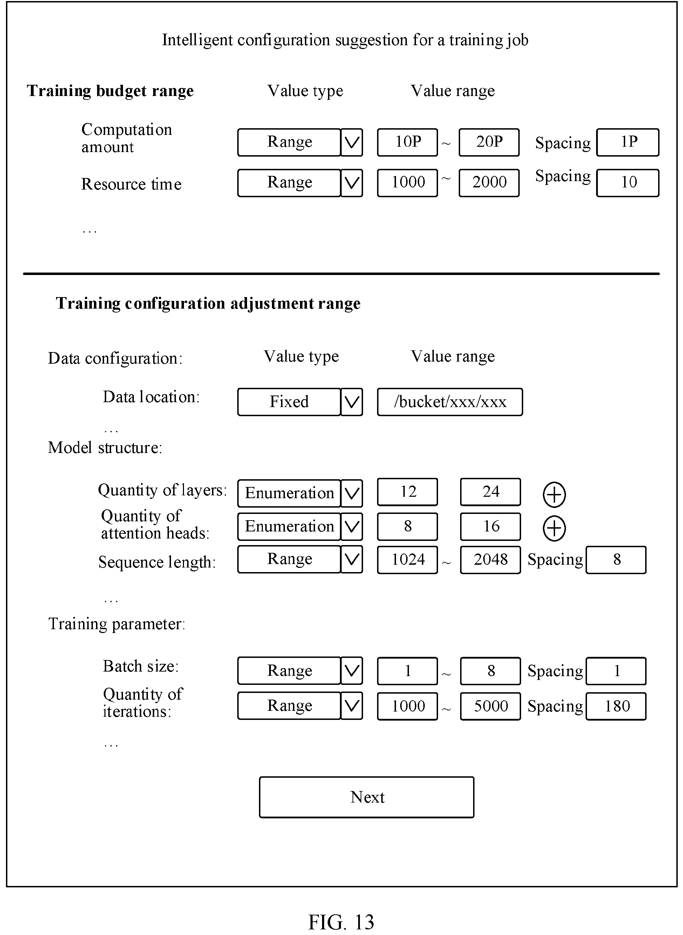

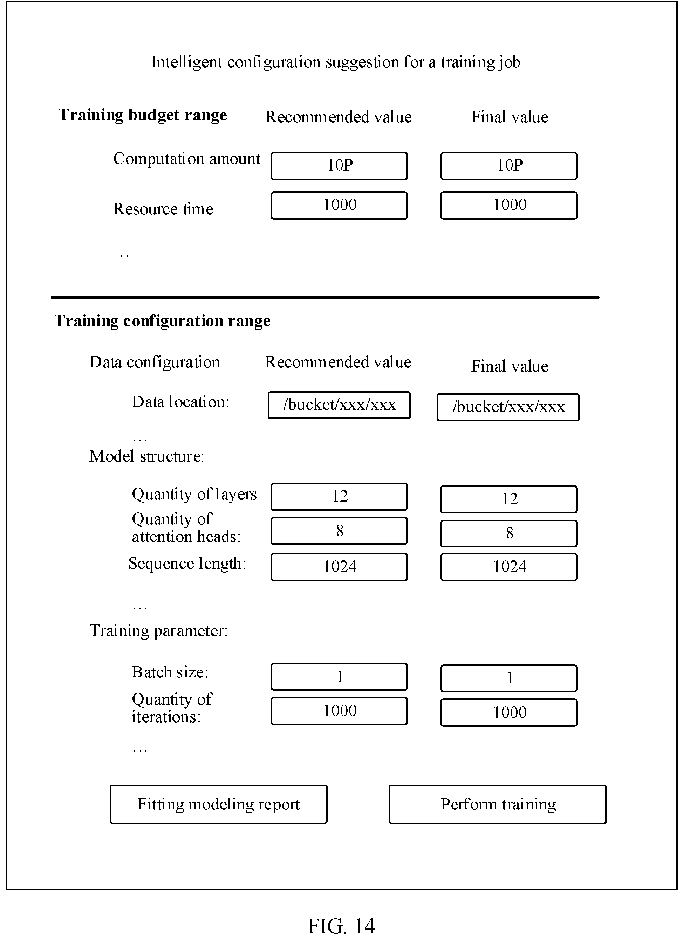

The estimation and analysis submodule is configured to evaluate and predict an optimal training configuration of a to-be-trained model by using an existing model. For example, after configuring a value range on an interface of a value range of a training job configuration shown in FIG. 13, the user starts a training modeling-based estimation and analysis task. After receiving a request, the estimation and analysis submodule reads a training modeling model selected in the recording module (recorder), substitutes the training modeling model into a current training limit, for example, a specific training target or training budget, and obtains an optimal configuration solution under the current limit through computation. In addition, when configurations such as a model scale, a training data volume, a training parameter, and a hardware type are estimated and modified, a benefit that can be achieved is estimated, to evaluate a next adjustment direction and result. For example, as shown in FIG. 14, the estimation and analysis submodule may provide a suggestion for a configuration value of a training job based on a prediction result.

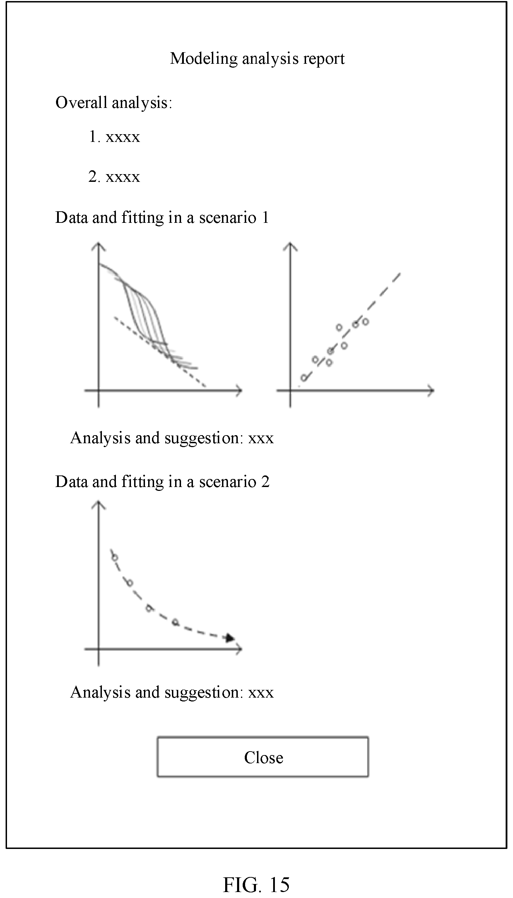

The report generation submodule is configured to generate an intuitive configuration recommendation report for the user by using an output result of the estimation and analysis submodule. As shown in FIG. 15, the configuration recommendation report is used to display an optimal parameter configuration under a current limitation, a recommendation reason, a benefit obtainable after the limitation is adjusted, and the like.

5. Recording module (recorder)

The recording module (recorder), as a data storage and display module, records collected data, processed data, and an analysis report of the analysis module (profiler), training modeling data, estimation and analysis data, and an analysis report of the prediction module (predictor), and the like; and interacts with the prediction module (predictor) to provide data for a modeling use of the prediction module (predictor) and for a display use of the manager. In the recording module (recorder), a model (used to predict a training process of a to-be-trained model) built by the prediction module (predictor) may be preset. The user may directly use the built model.

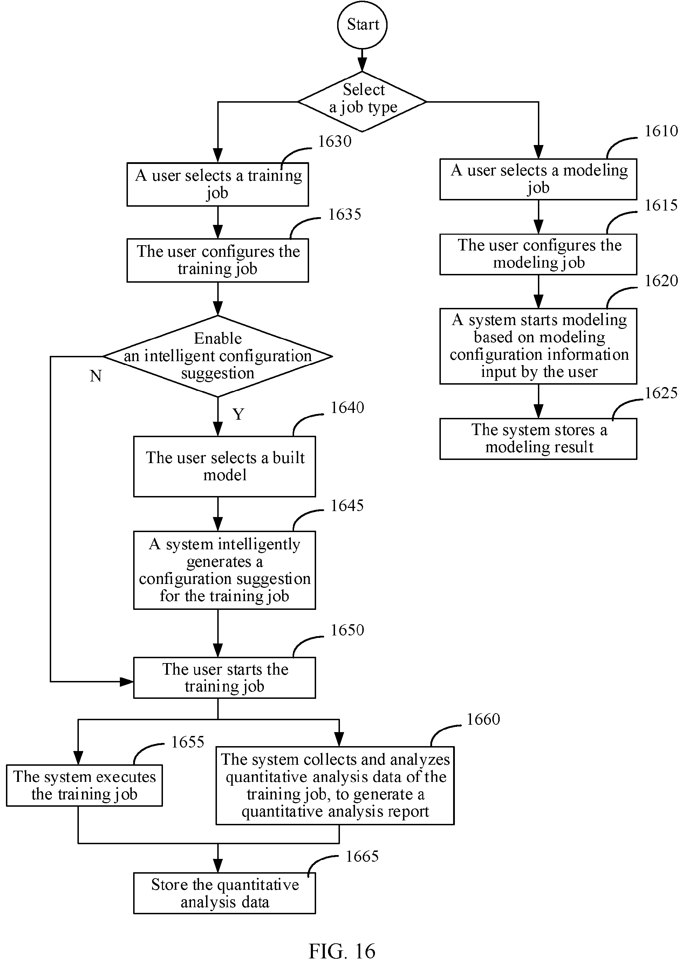

With reference to FIG. 16, the following describes in detail a specific implementation process of a model training method according to an embodiment of this application. It should be understood that the example in FIG. 16 is merely intended to help a person skilled in the art understand embodiments of this application, but are not intended to limit embodiments of this application to a specific value or specific scenario in the example in FIG. 16. It is clear that a person skilled in the art can make various equivalent modifications or changes based on the following example provided in FIG. 16, and such modifications and changes also fall within the scope of embodiments of this application.

FIG. 16 is a schematic flowchart of another model training method according to an embodiment of this application. As shown in FIG. 16, the method may include steps 1610 to 1665. The following separately describes steps 1610 to 1665 in detail.

Step 1610: A user selects a modeling job.

In this embodiment of this application, if a job type selected by the user is a modeling job, the user may choose to create a new training modeling job on the training modeling management interface shown in FIG. 8.

Step 1615: The user configures the modeling job.

In this embodiment of this application, the user may configure, on the training modeling configuration interface shown in FIG. 12, input parameters needed for modeling, for example, a model type, a modeling budget, a modeling range, and a modeling mode, and click a "start modeling" button.

Step 1620: A system starts modeling based on modeling configuration information input by the user.

In this embodiment of this application, the system obtains quantitative analysis data of a model in a training process based on the modeling configuration information input by the user. Specifically, in an implementation, the system performs a series of model training experiments, runs a training process of another model, and obtains quantitative analysis data and stores the quantitative analysis data. In another implementation, quantitative analysis data of a stored training job that has been run before in the system is read.

After obtaining the quantitative analysis data of the training job, the system starts modeling based on the modeling configuration information input by the user and the quantitative analysis data.

Step 1625: The system stores a modeling result.

After the model is built, the system stores the modeling result. After the modeling task is completed, the user can view a fitted modeling model on the training modeling management interface shown in FIG. 8.

Step 1630: A user selects a training job.

In this embodiment of this application, if a job type selected by the user is a training job, that is, the user needs to train a to-be-trained model, the user may choose to create a new training job on the training job management interface shown in FIG. 7.

Step 1635: The user configures the training job.

In this embodiment of this application, the user may input basic training information such as a model type, a training budget, and a training target in the training job configuration shown in FIG. 11. It should be understood that the training job configuration shown in FIG. 11 further includes whether to enable the intelligent configuration suggestion. If the user chooses to enable the intelligent configuration suggestion, that is, the user may select a built model, the model is used to provide a configuration suggestion in training job configuration information. If the user chooses not to enable the intelligent configuration suggestion, that is, skips enabling the intelligent configuration suggestion, the training job is to start a training process in a common way, and a system does not provide a configuration suggestion in training job configuration information.

Step 1640: If the user enables the intelligent configuration suggestion in the training job configuration, the user needs to select a built model.

In this embodiment of this application, models that have been built are displayed on the training modeling management interface shown in FIG. 8, and the user may select a model (for example, select a model 1 in FIG. 11) from these models.

Step 1645: The system intelligently generates a configuration suggestion for the training job.

In this embodiment of this application, the user may further set a training configuration adjustment range on an interface of an intelligent configuration suggestion for the training job shown in FIG. 13. The system can intelligently generate, based on the basic training information input by the user, a selected modeling model, and the training parameter adjustment range set by the user, the configuration suggestion for the training job shown in FIG. 14.

Step 1650: The user starts the training job based on the configuration suggestion that is for the training job and that is provided by the system.

The user may obtain the configuration suggestion for the training job shown in FIG. 14, and click a "perform training" button to start the training job. The system starts the training job based on the configuration suggestion for the training job.

Optionally, the user may further click "fitting modeling report" in FIG. 14, and the system displays, to the user, the generated modeling analysis report shown in FIG. 15.

Step 1655: The system executes the training job.

Specifically, the system executes the training task based on a training job configuration finally determined by the user.

Step 1660: The system collects quantitative analysis data of the training job, and analyzes the quantitative analysis data, to generate a quantitative analysis report.

In this embodiment of this application, when executing the training job, the system may further collect the quantitative analysis data (including training data and an output training result) of the training job in the execution process, and generate the quantitative analysis report shown in FIG. 10. The user may determine a next adjustment direction based on the training quantitative analysis report, and return to re-create a new training task.

Step 1665: The system stores the quantitative analysis data.

In this embodiment of this application, the system may store the quantitative analysis data, and periodically use the data in the background for modeling model optimization, to continuously improve prediction accuracy of a modeling model.

Optionally, in some embodiments, in the solution provided in this embodiment of this application, a closed-loop process of training modeling and analysis can be fully automated, provided that a user sets a budget limit, a target, and the like in advance, and a system automatically completes modeling, analysis, configuration modification, dynamic configuration modification, and the like, thereby further improving training efficiency.

Optionally, in some embodiments, the solution provided in this embodiment of this application may alternatively be used in an AI inference performance analysis and modeling scenario. Quantitative analysis data of an AI inference process is collected to estimate AI inference performance, and predict indicators such as a delay and a throughput in a specific AI inference configuration and hardware.

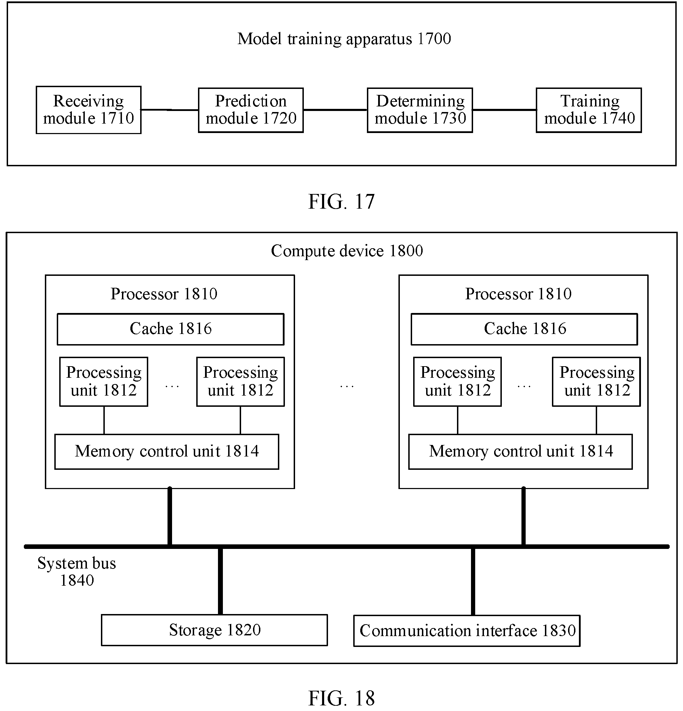

The foregoing describes in detail the method provided in embodiments of this application with reference to FIG. 1 to FIG. 16. The following describes in detail apparatus embodiments in this application in detail with reference to FIG. 17 to FIG. 20. It should be understood that descriptions of the method embodiments correspond to descriptions of the apparatus embodiments. Therefore, for a part that is not described in detail, refer to the foregoing method embodiments.

FIG. 17 is a block diagram of a model training apparatus 1700 according to an embodiment of this application. The apparatus 1700 may be implemented by software, hardware, or a combination of software and hardware. The apparatus 1700 provided in this embodiment of this application may implement the method procedure shown in FIG. 5 or FIG. 16 in embodiments of this application. The apparatus 1700 includes a receiving module 1710, a prediction module 1720, a determining module 1730, and a training module 1740. The receiving module 1710 is configured to receive a plurality of values of a configuration parameter of a first model that are input by a user, where the configuration parameter of the first model includes a training parameter and/or a model parameter of the first model. The prediction module 1720 is configured to perform prediction based on a second model, to obtain a plurality of pieces of training indicator data of the first model that respectively correspond to the plurality of values of the configuration parameter, where the training indicator data of the first model includes training process data of the first model and/or hardware indicator data consumed by a server for training the first model, input information of the second model includes a first value of the configuration parameter, output information of the second model includes first training indicator data of the first model, the plurality of values of the configuration parameter include the first value, and the training indicator data of the first model includes the first training indicator data. The determining module 1730 is configured to: determine target training indicator data from the plurality of pieces of training indicator data of the first model, and send, to the user, a target value that is in the plurality of values of the configuration parameter and that corresponds to the target training indicator data. The training module 1740 is configured to: receive the target value determined by the user, and train the first model based on the target value.

Optionally, the receiving module 1710 is further configured to obtain a configuration parameter of each of at least one third model and training indicator data of each third model. The training module 1740 is further configured to perform training based on the configuration parameter of each third model and the training indicator data of each third model, to obtain the second model.

Optionally, the receiving module 1710 is specifically configured to: in a training process of the at least one third model, automatically collect the configuration parameter of each of the at least one third model and the training indicator data of each third model.

Optionally, the apparatus 1700 further includes: a generation module, configured to generate a recommendation report of the first model based on the target value of the configuration parameter of the first model, where the recommendation report of the first model includes the target value, a recommendation reason of the target value, and/or a benefit obtainable by training the first model by using the target value; and a display module, configured to display the recommendation report of the first model to the user.

Optionally, the training module 1740 is further configured to: in a training process of the first model, automatically collect a value of a configuration parameter used for the first model in an actual training process and actual corresponding training indicator data.

Optionally, the training module 1740 is further configured to update the second model based on the value of the configuration parameter used for the first model in the actual training process and the actual corresponding training indicator data.

Optionally, the apparatus is used in a cloud management platform, the cloud management platform is configured to manage an infrastructure that provides a cloud service, the infrastructure includes at least one cloud data center, at least one server is disposed in each cloud data center, and the at least one server is configured to train the first model, the second model, and the third model.

The apparatus 1700 may be implemented in a form of a functional module. The term "module" herein may be implemented in a form of software and/or hardware, and this is not specifically limited.

For example, the "module" may be a software program, a hardware circuit, or a combination thereof that implements the foregoing functions. For example, the following uses the receiving module 1710 as an example to describe an implementation of the receiving module 1710. Similarly, for implementations of other modules such as the prediction module 1720, the determining module 1730, the training module 1740, the generation module, and the display module, refer to the implementation of the receiving module 1710.

The receiving module 1710 is used as an example of a software functional unit, and the receiving module 1710 may include code running on a compute instance. The compute instance may include at least one of a physical host (compute device), a virtual machine, and a container. Further, there may be one or more compute instances. For example, the receiving module 1710 may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region or between VPCs in different regions. Interconnection between the VPCs is implemented through the communication gateway.

The receiving module 1710 is used as an example of a hardware functional unit, and the receiving module 1710 may include at least one compute device like a server. Alternatively, the receiving module 1710 may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of compute devices included in the receiving module 1710 may be distributed in a same region, or may be distributed in different regions. The plurality of compute devices included in the receiving module 1710 may be distributed in a same AZ, or may be distributed in different AZs. Similarly, the plurality of compute devices included in the receiving module 1710 may be distributed in a same VPC, or may be distributed in a plurality of VPCs. The plurality of compute devices may be any combination of compute devices such as a server, an ASIC, a PLD, a CPLD, an FPGA, and GAL.

Therefore, modules in the examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It should be noted that when the apparatus provided in the foregoing embodiment performs the foregoing method, division into the foregoing functional modules is merely used as an example for description. During actual application, the foregoing functions may be allocated as needed to different functional modules for implementation, that is, an internal structure of the apparatus is divided into different functional modules to implement all or some of the functions described above. For example, the receiving module 1710 may be configured to perform any step in the foregoing method, the prediction module 1720 may be configured to perform any step in the foregoing method, the determining module 1730 may be configured to perform any step in the foregoing method, the training module 1740 may be configured to perform any step in the foregoing method, the generation module may be configured to perform any step in the foregoing method, and the display module may be configured to perform any step in the foregoing method. Steps that the receiving module 1710, the prediction module 1720, the determining module 1730, the training module 1740, the generation module, and the display module are responsible for implementing may be specified as needed. The receiving module 1710, the prediction module 1720, the determining module 1730, the training module 1740, the generation module, and the display module separately implement different steps in the foregoing method to implement all functions of the foregoing apparatus.

In addition, the apparatus embodiments and the method embodiments provided in the foregoing embodiments belong to a same concept. For specific implementation processes thereof, refer to the method embodiments. Details are not described herein again.

The method provided in embodiments of this application may be performed by a compute device, and the compute device may also be referred to as a computer system. The compute device may include a hardware layer, an operating system layer running above the hardware layer, and an application layer running above the operating system layer. The hardware layer includes hardware, for example, a processing unit, a memory, and a memory control unit. Subsequently, functions and structures of the hardware are described in detail. The operating system is any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, optionally, the computer system is a handheld device, for example, a smartphone, or a terminal device, for example, a personal computer. This is not particularly limited in this application, provided that the method according to embodiments of this application can be implemented. The method provided in embodiments of this application may be performed by the compute device or a functional module that is in the compute device and that can invoke and execute a program.

With reference to FIG. 18, the following describes in detail, a compute device according to an embodiment of this application.

FIG. 18 is a diagram of an architecture of a compute device 1800 according to an embodiment of this application. The compute device 1800 may be a server, a computer, or another device with a computing capability. The compute device 1800 shown in FIG. 18 includes at least one processor 1810 and a storage 1820.

It should be understood that a quantity of processors and a quantity of storages in the compute device 1800 are not limited in this application.

The processor 1810 executes instructions in the storage 1820, so that the compute device 1800 implements the method provided in this application. Alternatively, the processor 1810 executes instructions in the storage 1820, so that the compute device 1800 implements the functional modules provided in this application to implement the method provided in this application.

Optionally, the compute device 1800 further includes a communication interface 1830. The communication interface 1830 uses a transceiver module, for example, but not limited to, a network interface card or a transceiver, to implement communication between the compute device 1800 and another device or a communication network.

Optionally, the compute device 1800 further includes a system bus 1840. The processor 1810, the storage 1820, and the communication interface 1830 are separately connected to the system bus 1840. The processor 1810 can access the storage 1820 through the system bus 1840. For example, the processor 1810 can read and write data or execute code in the storage 1820 through the system bus 1840. The system bus 1840 is a peripheral component interconnect express (peripheral component interconnect express, PCI) bus, an extended industry standard architecture (extended industry standard architecture, EISA) bus, or the like. The system bus 1840 is classified into an address bus, a data bus, a control bus, or the like. For ease of representation, only one bold line is used to represent the bus in FIG. 18, but this does not mean that there is only one bus or only one type of bus.

In a possible implementation, a function of the processor 1810 is mainly to interpret instructions (or code) of a computer program and process data in computer software. The instructions of the computer program and the data in the computer software can be stored in the storage 1820 or a cache 1816.

Optionally, the processor 1810 may be an integrated circuit chip and has a signal processing capability. By way of example and not limitation, the processor 1810 is a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor is a microprocessor or the like. For example, the processor 1810 is a central processing unit (central processing unit, CPU).

Optionally, each processor 1810 includes at least one processing unit 1812 and a memory control unit 1814.

Optionally, the processing unit 1812 is also referred to as a core (core) or a kernel, and is a most important component of the processor. The processing unit 1812 is made of monocrystalline silicon through a specific production process. All computation, accept commands, storage commands, and data processing of the processor are executed by the core. The processing unit independently runs program instructions, and increases a running speed of a program by using a parallel computing capability. Various processing units have fixed logical structures. For example, the processing unit includes logical units such as a level 1 cache, a level 2 cache, an execution unit, an instruction level unit, and a bus interface.

In an implementation example, the memory control unit 1814 is configured to control data exchange between the storage 1820 and the processing unit 1812. Specifically, the memory control unit 1814 receives a memory access request from the processing unit 1812, and controls access to the memory based on the memory access request. By way of example and not limitation, the memory control unit is a device like a memory management unit (memory management unit, MMU).

In an implementation example, each memory control unit 1814 performs addressing for the storage 1820 through the system bus. In addition, an arbiter (not shown in FIG. 18) is configured in the system bus, and the arbiter is responsible for processing and coordinating contention-based access of a plurality of processing units 1812.

In an implementation example, the processing unit 1812 is in communication connection with the memory control unit 1814 through a connection line inside a chip, for example, an address line, to implement communication between the processing unit 1812 and the memory control unit 1814.

Optionally, each processor 1810 further includes a cache 1816, and the cache is a data exchange buffer (referred to as a cache). When the processing unit 1812 needs to read data, the processing unit 1812 first searches the cache for needed data. If the needed data is found, the processing unit 1812 directly reads the data. If the needed data is not found, the processing unit 1812 searches the storage for the needed data. Because the cache runs much faster than the storage, a function of the cache is to help the processing unit 1812 run faster.

The storage 1820 can provide running space for a process in the compute device 1800. For example, the storage 1820 stores a computer program (specifically, code of the program) for generating the process. After the computer program is run by the processor to generate the process, the processor allocates corresponding storage space to the process in the storage 1820. Further, the storage space further includes a text segment, an initial data segment, an uninitialized data segment, a stack segment, a heap segment, and the like. The storage 1820 stores, in the storage space corresponding to the process, data generated during running of the process, for example, intermediate data or process data.

Optionally, the storage is also referred to as a memory, and is configured to temporarily store operation data in the processor 1810 and data exchanged with an external memory like a hard disk. Provided that a computer is running, the processor 1810 schedules, to the memory for an operation, data on which the operation needs to be performed, and the processing unit 1812 sends a result after the operation is completed.

By way of example and not limitation, the storage 1820 is a volatile storage or a non-volatile storage, or may include both a volatile storage and a non-volatile storage. The non-volatile storage is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile storage is a random access memory (random access memory, RAM) and serves as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the storage 1820 of the system and method described in this specification includes but is not limited to these and any storage of another proper type.

The listed structure of the compute device 1800 is merely an example for description, and this application is not limited thereto. The compute device 1800 in this embodiment of this application includes various types of hardware in a computer system in a conventional technology. For example, the compute device 1800 further includes a storage other than the storage 1820, for example, a magnetic disk storage. A person skilled in the art should understand that the compute device 1800 may further include another device needed for implementing normal running. In addition, according to a specific requirement, a person skilled in the art should understand that the compute device 1800 may further include a hardware device for implementing another additional function. In addition, a person skilled in the art should understand that the compute device 1800 may alternatively include only a device necessary for implementing embodiments of this application, and not necessarily include all the devices shown in FIG. 18.

An embodiment of this application further provides a compute device cluster. The compute device cluster includes at least one compute device. The compute device may be a server. In some embodiments, the compute device may alternatively be a terminal device, for example, a desktop computer, a notebook computer, or a smartphone.

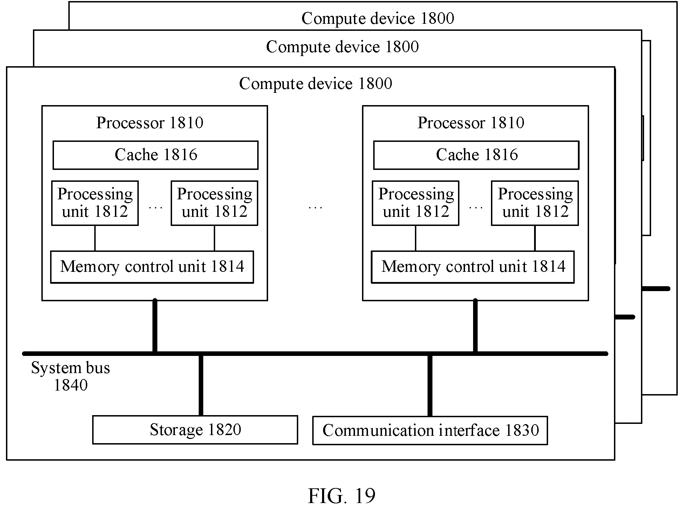

As shown in FIG. 19, the compute device cluster includes at least one compute device 1800. A storage 1820 of one or more compute devices 1800 in the compute device cluster may store same instructions for performing the foregoing method.

In some possible implementations, the storage 1820 in one or more compute devices 1800 in the compute device cluster may alternatively separately store some instructions used to perform the foregoing method. In other words, a combination of the one or more compute devices 1800 may jointly execute the instructions for performing the foregoing method.

It should be noted that, storages 1820 in different compute devices 1800 in the compute device cluster may store different instructions, which are respectively used to perform some functions of the foregoing apparatus. In other words, instructions stored in the storages 1820 in different compute devices 1800 may implement functions of one or more modules in the foregoing apparatus.

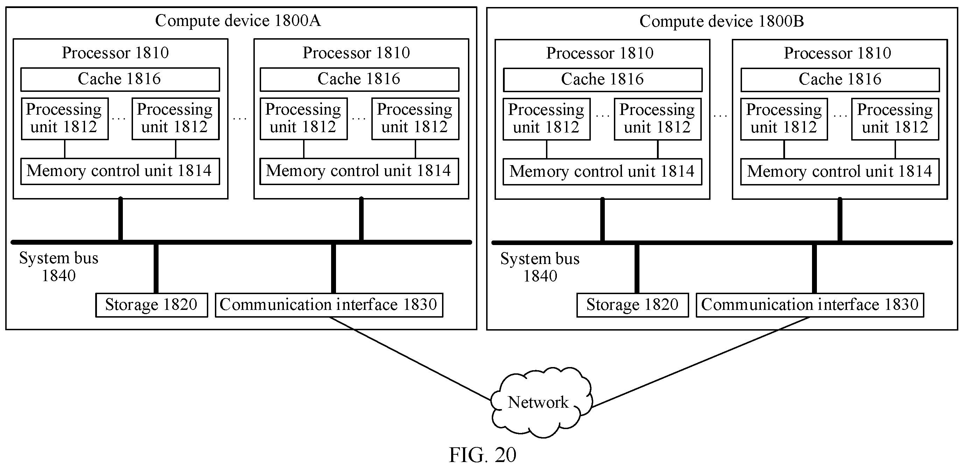

In some possible implementations, the one or more compute devices in the compute device cluster may be connected over a network. The network may be a wide area network, a local area network, or the like. FIG. 20 shows a possible implementation. As shown in FIG. 20, two compute devices 1800A and 1800B are connected over a network. Specifically, each compute device is connected to the network through a communication interface in the compute device.

It should be understood that functions of the compute device 1800A shown in FIG. 20 may alternatively be implemented by a plurality of compute devices 1800. Similarly, functions of the compute device 1800B may alternatively be implemented by a plurality of compute devices 1800.

In this embodiment, a computer program product including instructions is further provided. The computer program product may be software or a program product that includes the instructions and that can run on a compute device or be stored in any usable medium. When the computer program product is running on a compute device, the compute device is enabled to perform the method provided above, or the compute device is enabled to implement functions of the apparatus provided above.

In this embodiment, a computer-readable storage medium is further provided. The computer-readable storage medium may be any usable medium that can be stored by a compute device, or a data storage device like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. When the instructions in the computer-readable storage medium are executed on the compute device, the compute device is enabled to perform the method provided above.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments according to this application, it should be understood that the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1.  A model training method, wherein the method comprises:

    receiving a plurality of values of a configuration parameter of a first model that are input by a user, wherein the configuration parameter of the first model comprises a training parameter and/or a model parameter of the first model;
    performing prediction based on a second model, to obtain a plurality of pieces of training indicator data of the first model that respectively correspond to the plurality of values of the configuration parameter, wherein the training indicator data of the first model comprises training process data of the first model and/or hardware indicator data consumed by a server for training the first model, input information of the second model comprises a first value of the configuration parameter, output information of the second model comprises first training indicator data of the first model, the plurality of values of the configuration parameter comprise the first value, and the training indicator data of the first model comprises the first training indicator data;
    determining target training indicator data from the plurality of pieces of training indicator data of the first model, and providing, for the user, a target value that is in the plurality of values of the configuration parameter and that corresponds to the target training indicator data; and
    receiving the target value determined by the user, and training the first model based on the target value.

2.  The method according to claim 1, wherein the method further comprises:

    obtaining a configuration parameter of each of at least one third model and training indicator data of each third model; and
    performing training based on the configuration parameter of each third model and the training indicator data of each third model, to obtain the second model.

3.  The method according to claim 2, wherein obtaining the configuration parameter of each of the at least one third model and the training indicator data of each third model comprises:

in a training process of the at least one third model, automatically collecting the configuration parameter of each of the at least one third model and the training indicator data of each third model.

**4.** The method according to any one of claims 1 to 3, wherein the method further comprises:

generating a recommendation report of the first model based on the target value of the configuration parameter of the first model, wherein the recommendation report of the first model comprises the target value, a recommendation reason of the target value, and/or a benefit obtainable by training the first model by using the target value; and
displaying the recommendation report of the first model to the user.

**5.** The method according to any one of claims 1 to 4, wherein the method further comprises:
in a training process of the first model, automatically collecting a value of a configuration parameter used for the first model in an actual training process and actual corresponding training indicator data.

**6.** The method according to claim 5, wherein the method further comprises:
updating the second model based on the value of the configuration parameter used for the first model in the actual training process and the actual corresponding training indicator data.

**7.** The method according to any one of claims 1 to 6, wherein the method is applied to a cloud management platform, the cloud management platform is configured to manage an infrastructure that provides a cloud service, the infrastructure comprises at least one cloud data center, at least one server is disposed in each cloud data center, and the at least one server is configured to train the first model, the second model, and the third model.

**8.** A model training apparatus, wherein the apparatus comprises:

a receiving module, configured to receive a plurality of values of a configuration parameter of a first model that are input by a user, wherein the configuration parameter of the first model comprises a training parameter and/or a model parameter of the first model;
a prediction module, configured to perform prediction based on a second model, to obtain a plurality of pieces of training indicator data of the first model that respectively correspond to the plurality of values of the configuration parameter, wherein the training indicator data of the first model comprises training process data of the first model and/or hardware indicator data consumed by a server for training the first model, input information of the second model comprises a first value of the configuration parameter, output information of the second model comprises first training indicator data of the first model, the plurality of values of the configuration parameter comprise the first value, and the training indicator data of the first model comprises the first training indicator data;
a determining module, configured to: determine target training indicator data from the plurality of pieces of training indicator data of the first model, and provide, for the user, a target value that is in the plurality of values of the configuration parameter and that corresponds to the target training indicator data; and
a training module, configured to: receive the target value determined by the user, and train the first model based on the target value.

**9.** The apparatus according to claim 8, wherein

the receiving module is further configured to obtain a configuration parameter of each of at least one third model and training indicator data of each third model; and
the training module is further configured to perform training based on the configuration parameter of each third model and the training indicator data of each third model, to obtain the second model.

**10.** The apparatus according to claim 9, wherein the receiving module is specifically configured to:
in a training process of the at least one third model, automatically collect the configuration parameter of each of the at least one third model and the training indicator data of each third model.

**11.** The apparatus according to any one of claims 8 to 10, wherein the apparatus further comprises:

a generation module, configured to generate a recommendation report of the first model based on the target value of the configuration parameter of the first model, wherein the recommendation report of the first model comprises the target value, a recommendation reason of the target value, and/or a benefit obtainable by training the first model by using the target value; and
a display module, configured to display the recommendation report of the first model to the user.

**12.** The apparatus according to any one of claims 8 to 11, wherein

the training module is further configured to: in a training process of the first model, automatically collect a value of a configuration parameter used for the first model in an actual training process and actual corresponding training indicator data.

13. The apparatus according to claim 12, wherein the training module is further configured to update the second model based on the value of the configuration parameter used for the first model in the actual training process and the actual corresponding training indicator data.

14. The apparatus according to any one of claims 8 to 13, wherein the apparatus is used in a cloud management platform, the cloud management platform is configured to manage an infrastructure that provides a cloud service, the infrastructure comprises at least one cloud data center, at least one server is disposed in each cloud data center, and the at least one server is configured to train the first model, the second model, and the third model.

15. A compute device cluster, comprising at least one compute device, wherein each compute device comprises a processor and a storage; and the processor of the at least one compute device is configured to execute instructions stored in the storage of the at least one compute device, to enable the compute device cluster to perform the method according to any one of claims 1 to 7.

16. A computer program product comprising instructions, wherein when the instructions are run by a compute device cluster, the compute device cluster is enabled to perform the method according to any one of claims 1 to 7.

17. A computer-readable storage medium, comprising computer program instructions, wherein when the computer program instructions are executed by a compute device cluster, the compute device cluster performs the method according to any one of claims 1 to 7.

FIG. 1

FIG. 2

FIG. 3

Data center

Server

Server Server

Basic resource

Cloud
management
platform 310

AI basic
development
platform

Cloud
environment

1: Purchase a
cloud service

2: AI
development

Tenant 330

FIG. 4

Receive a plurality of values of a configuration parameter of a first model that are input by a user — 510

Perform prediction based on a second model, to obtain a plurality of pieces of training indicator data of the first model that respectively correspond to the plurality of values of the configuration parameter — 520

Determine target training indicator data from the plurality of pieces of training indicator data of the first model, and send, to the user, a target value that is in the plurality of values of the configuration parameter and that corresponds to the target training indicator data — 530

Receive the target value determined by the user, and train the first model based on the target value — 540

FIG. 5

FIG. 6

Training job management

⊕ Create a training job

| Job name | Creation date | Job status | Operation | | |
|---|---|---|---|---|---|
| Job 1 | xxxx-xx-xx | Running | Start | Stop | View |
| Job 2 | xxxx-xx-xx | To be adjusted | Start | Stop | View |
| Job 3 | xxxx-xx-xx | Completed | Start | Stop | View |
| Job 4 | xxxx-xx-xx | Stopped | Start | Stop | View |

...

FIG. 7

Training modeling management

⊕ Create a training modeling job

| Model name | Creation date | Job status | Operation | | |
|---|---|---|---|---|---|
| Model 1 | xxxx-xx-xx | Modeling | Start | Stop | View |
| Model 2 | xxxx-xx-xx | Completed | Start | Stop | View |
| Model 3 | xxxx-xx-xx | Completed | Start | Stop | View |
| Model 4 | xxxx-xx-xx | Failed | Start | Stop | View |

...

FIG. 8

User-defined data analysis

User-defined data 1

Referenced data name: [　　　] Data type: [　　　]

Referenced data name: [　　　] Data type: [　　　]

⊕ Add referenced data

Generation logic:

```
def process(a,b,c):
    …
    return…
```

User-defined data 2

Referenced data name: [　　　] Data type: [　　　]

Referenced data name: [　　　] Data type: [　　　]

⊕ Add referenced data

Generation logic:

```
def process(a,b,c):
    …
    return…
```

⊕ Add user-defined data

FIG. 9

Quantitative analysis
report

Overview:

  1. xxxx

  2. xxxx

Data 1

Analysis and
suggestion: xxx

Data 2

Analysis and
suggestion: xxx

Data 3

Analysis and
suggestion: xxx

Next

FIG. 10

Training job configuration

**Model type:**  | GPT ∨ |

---

**Training budget**

Computation
amount  [        ]  Flops

Resource×time  | Type 1 ∨ |  X  [        ]  Hours

…

---

**Training target**

Test set loss  [        ]

Validation set perplexity  [        ]

…

---

**Intelligent configuration suggestion**

◯  Existing model
    selection:  | Model 1 ∨ |

◯  Skip

| Next |

FIG. 11

Training modeling configuration

**Model type:** | GPT ∨ |

---

**Modeling budget**

Computation amount | [    ] Flops

Resource×time | Type 1 ∨ | X [    ] Hours

...

---

**Training modeling range**

Data configuration:      Modeling or not

     Data volume:      | Yes ∨ |

     ...

Model structure:

     Quantity of layers:      | No ∨ |

     Quantity of attention heads:      | No ∨ |

     Sequence length:      | No ∨ |

     ...

Training parameter:

     Batch size:      | Yes ∨ |

     Quantity of iterations:      | Yes ∨ |

     ...

---

**Modeling mode:**      | Mode 1 ∨ |

| Start modeling |

FIG. 12

Intelligent configuration suggestion for a training job

**Training budget range**     Value type          Value range

Computation amount    [ Range ∨ ]    [ 10P ] ~ [ 20P ]    Spacing [ 1P ]

Resource time    [ Range ∨ ]    [ 1000 ] ~ [ 2000 ]    Spacing [ 10 ]

…

**Training configuration adjustment range**

Data configuration:          Value type          Value range

Data location:    [ Fixed ∨ ]    [ /bucket/xxx/xxx ]

…

Model structure:

Quantity of layers:    [ Enumeration ∨ ]    [ 12 ]    [ 24 ]    ⊕

Quantity of attention heads:    [ Enumeration ∨ ]    [ 8 ]    [ 16 ]    ⊕

Sequence length:    [ Range ∨ ]    [ 1024 ] ~ [ 2048 ]    Spacing [ 8 ]

…

Training parameter:

Batch size:    [ Range ∨ ]    [ 1 ] ~ [ 8 ]    Spacing [ 1 ]

Quantity of iterations:    [ Range ∨ ]    [ 1000 ] ~ [ 5000 ]    Spacing [ 180 ]

…

[ Next ]

FIG. 13

Intelligent configuration suggestion for a training job

**Training budget range**   Recommended value   Final value

Computation amount | 10P | 10P

Resource time | 1000 | 1000

...

---

**Training configuration range**

Data configuration:   Recommended value   Final value

Data location: | /bucket/xxx/xxx | /bucket/xxx/xxx

...

Model structure:

Quantity of layers: | 12 | 12
Quantity of attention heads: | 8 | 8
Sequence length: | 1024 | 1024

...

Training parameter:

Batch size: | 1 | 1
Quantity of iterations: | 1000 | 1000

...

| Fitting modeling report | Perform training |

FIG. 14

Modeling analysis report

Overall analysis:

    1. xxxx

    2. xxxx

Data and fitting in a scenario 1

Analysis and suggestion: xxx

Data and fitting in a scenario 2

Analysis and suggestion: xxx

Close

FIG. 15

FIG. 16

Model training apparatus 1700

| Receiving module 1710 | Prediction module 1720 | Determining module 1730 | Training module 1740 |

FIG. 17

Compute device 1800

Processor 1810

Cache 1816

| Processing unit 1812 | ... | Processing unit 1812 |

Memory control unit 1814

...

Processor 1810

Cache 1816

| Processing unit 1812 | ... | Processing unit 1812 |

Memory control unit 1814

System bus 1840

Storage 1820

Communication interface 1830

FIG. 18

Compute device 1800

Compute device 1800

Compute device 1800

| Processor 1810 | Processor 1810 |
|---|---|
| Cache 1816 | Cache 1816 |

Processing unit 1812 ··· Processing unit 1812

···

Processing unit 1812 ··· Processing unit 1812

Memory control unit 1814

Memory control unit 1814

System bus 1840

Storage 1820

Communication interface 1830

FIG. 19

FIG. 20

## INTERNATIONAL SEARCH REPORT

| | International application No. |
|---|---|
| | **PCT/CN2024/104953** |

**A. CLASSIFICATION OF SUBJECT MATTER**

G06V 10/774(2022.01)i; G06V 10/776(2022.01)i; G06N 3/084(2023.01)i; G06N 3/092(2023.01)i; G06N 3/0499(2023.01)i; G06N 3/0464(2023.01)i; G06N 3/045(2023.01)i

According to International Patent Classification (IPC) or to both national classification and IPC

**B. FIELDS SEARCHED**

Minimum documentation searched (classification system followed by classification symbols)

IPC: G06V G06N

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; WOTXT; EPTXT: 模型, 配置, 参数, 多个, 取值, 指标, 目标, 训练, model, disposition, parameter, multiple, value, target, object, aim, training

**C. DOCUMENTS CONSIDERED TO BE RELEVANT**

| Category* | Citation of document, with indication, where appropriate, of the relevant passages | Relevant to claim No. |
|---|---|---|
| X | CN 113988212 A (SHENZHEN IDEAMAKE TECHNOLOGY CO., LTD.) 28 January 2022 (2022-01-28)<br>description, paragraphs [0027]-[0119] | 1-17 |
| A | CN 114268961 A (CHINA UNITED NETWORK COMMUNICATIONS GROUP CO., LTD.) 01 April 2022 (2022-04-01)<br>entire document | 1-17 |
| A | US 2018240041 A1 (SAS INSTITUTE INC.) 23 August 2018 (2018-08-23)<br>entire document | 1-17 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 August 2024** | **02 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/104953**

| Patent document cited in search report | | | Publication date (day/month/year) | Patent family member(s) | | | Publication date (day/month/year) |
|---|---|---|---|---|---|---|---|
| CN | 113988212 | A | 28 January 2022 | None | | | |
| CN | 114268961 | A | 01 April 2022 | None | | | |
| US | 2018240041 | A1 | 23 August 2018 | US | 10360517 | B2 | 23 July 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311234964
- CN 202311607988